# EUROPEAN PATENT APPLICATION

(11) **EP 4 832 515 A1**
(43) Date of publication of application: **28.10.2026**
(21) Application number: 25893929.7
(22) Date of filing: 28.10.2025
(51) Int. Cl.: H04W 4/02

(54) **COMMUNICATION METHOD AND ELECTRONIC DEVICE**

(30) Priority: 22.11.2024 CN 202411693268
(71) Applicant: Huawei Technologies Co., Ltd., Shenzhen, Guangdong 518129 (CN)
(72) Inventor: JIA, Qinyong, Shenzhen, Guangdong 518129 (CN); WANG, Liang, Shenzhen, Guangdong 518129 (CN)
(74) Representative: Epping - Hermann - Fischer
(86) International application number: PCT/CN2025/130469
(87) International publication number: WO 2026/108546

(57) **Abstract**

This application provides a communication method and an electronic device, and relates to the field of terminal technologies. A first electronic device in this application can adaptively switch a ranging manner based on whether a second electronic device is located inside a vehicle, so that when the second electronic device is located inside the vehicle, air interface resources occupied by a ranging function can be reduced, to avoid affecting communication quality of another device in the vehicle. The method includes: When the second electronic device is located outside the vehicle, the first electronic device obtains a distance to the second electronic device in a first ranging manner; and when the second electronic device is located inside the vehicle, the first electronic device obtains the distance to the second electronic device in a second ranging manner, where ranging precision of the second ranging manner is less than ranging precision of the first ranging manner.

## Description

This application claims priority to Chinese Patent Application No. 202411693268.8, filed with the China National Intellectual Property Administration on November 22, 2024 and entitled "COMMUNICATION METHOD AND ELECTRONIC DEVICE", which is incorporated herein by reference in its entirety.

### TECHNICAL FIELD

This application relates to the field of terminal technologies, and in particular, to a communication method and an electronic device.

### BACKGROUND

With development of terminal technologies, a vehicle key function may be installed on an electronic device. After establishing a wireless communication connection to a vehicle based on a Bluetooth communication technology, the electronic device may control the vehicle via the vehicle key function. For example, through the wireless communication connection, after the vehicle detects approaching of the electronic device, automatic unlocking may be triggered, simplifying an unlocking step of a user. For another example, after the user carries the electronic device and gets in the vehicle, the vehicle may determine a location of the user through the wireless communication connection, to provide services such as seat adjustment, air conditioner adjustment, and infotainment system setting for the user at a corresponding location.

The vehicle implements a ranging function based on a Bluetooth channel sounding (channel sounding, CS) technology. However, CS ranging may occupy a large quantity of air interface resources, affecting linkage between the electronic device and the vehicle. For example, linkage of an audio, a call, and the like between the electronic device and the vehicle is affected.

### SUMMARY

To resolve the foregoing technical problem, this application provides a communication method and an electronic device. According to the technical solution provided in this application, a first electronic device can adaptively switch a ranging manner based on whether a second electronic device is located inside a vehicle, so that when the second electronic device is located inside the vehicle, air interface resources occupied by a ranging function can be reduced, to avoid affecting communication quality of another device in the vehicle.

To achieve the foregoing technical objective, this application provides the following technical solutions.

According to a first aspect, a communication method is provided, applied to a first electronic device, where the first electronic device is a vehicle or a processing module in the vehicle, and the method includes: When a second electronic device is located outside the vehicle, the first electronic device obtains a distance to the second electronic device in a first ranging manner; and when the second electronic device is located inside the vehicle, the first electronic device obtains the distance to the second electronic device in a second ranging manner, where ranging precision of the second ranging manner is less than ranging precision of the first ranging manner.

In this way, a ranging manner is flexibly switched between inside the vehicle and outside the vehicle, to reduce power consumption and improve appropriate use of air interface resources while meeting a ranging requirement.

According to the first aspect, after the first electronic device obtains the distance to the second electronic device in the second ranging manner, the method further includes: after detecting that a vehicle door is opened, obtaining the distance to the second electronic device in the first ranging manner.

After the vehicle door is opened, a user may have a requirement for getting out of the vehicle. In this case, the first electronic device switches the ranging manner from the second ranging manner to the first ranging manner. In this way, it is convenient to obtain a more accurate ranging result subsequently.

According to the first aspect or any implementation of the first aspect, the method further includes: detecting that the vehicle door is closed; when the second electronic device is located inside the vehicle, obtaining the distance to the second electronic device in the second ranging manner; and when the second electronic device is located outside the vehicle, obtaining the distance to the second electronic device in the first ranging manner.

For example, after detecting that the vehicle door is opened, the first electronic device performs ranging in the first ranging manner. In this process, the first electronic device may detect that the vehicle door is closed. If the first electronic device detects that the vehicle door is closed, there may be two cases. In one case, the user closes the vehicle door without getting out of the vehicle.

In this case, the second electronic device is still inside the vehicle, and the first electronic device may switch the ranging manner from the first ranging manner back to the second ranging manner. In this way, a ranging requirement of the first electronic device can be met, and air interface resource occupation and power consumption caused by ranging can be reduced. In another case, the user closes the vehicle door after getting out of the vehicle. In this case, the second electronic device is outside the vehicle, and the first electronic device may continue to perform ranging in the first ranging manner. In this way, a more accurate ranging result can be obtained.

In this way, the ranging manner is flexibly adjusted based on a user requirement and an actual situation.

According to the first aspect or any implementation of the first aspect, the first ranging manner is any one or more of the following: Bluetooth channel sounding-based ranging, SparkLink low energy measurement, and multi-node ranging; and the second ranging manner is received signal strength indicator ranging and/or single-node ranging.

In this way, a plurality of flexible implementations of the first ranging manner and the second ranging manner meet power consumption reduction and increase flexibility of switching of the ranging manner.

According to the first aspect or any implementation of the first aspect, the method further includes: The first electronic device determines whether the distance to the second electronic device is less than or equal to a first threshold; and when the distance between the first electronic device and the second electronic device is less than or equal to the first threshold, determines that the second electronic device is located inside the vehicle.

In this way, whether the second electronic device is located inside the vehicle is determined based on the distance, to determine whether the ranging manner needs to be adjusted.

According to the first aspect or any implementation of the first aspect, that the first electronic device determines whether the distance to the second electronic device is less than or equal to the first threshold includes: The first electronic device determines, in any one or more of the first ranging manner, the second ranging manner, a connectionless ranging manner, ultrasonic positioning, and global satellite positioning, whether the distance to the second electronic device is less than or equal to the first threshold.

In this way, the first electronic device also flexibly determines, in a plurality of manners, whether the second electronic device is located inside the vehicle, to trigger switching of the ranging manner.

According to the first aspect or any implementation of the first aspect, before obtaining the distance to the second electronic device, the method further includes: sending a first broadcast based on a first wireless communication technology, where the first broadcast carries at least one of the following content: a first address that is of the first electronic device and that is based on the first wireless communication technology, a first indication indicating that the first electronic device supports a second wireless communication technology, and a second indication indicating that a second address carried in a broadcast sent by the first electronic device based on the second wireless communication technology is a random address, where the first broadcast is used to establish a wireless communication connection to the second electronic device based on the second wireless communication technology.

The first wireless communication technology is, for example, a Bluetooth communication technology, and the second wireless communication technology is, for example, a SparkLink communication technology.

In this way, the second electronic device can establish a SparkLink connection to the second electronic device by receiving a Bluetooth broadcast (for example, the first broadcast) sent by the first electronic device. In this way, the second electronic device may not need to enable SparkLink scanning by default, to reduce power consumption of SparkLink scanning.

According to the first aspect or any implementation of the first aspect, before obtaining the distance to the second electronic device, the method further includes: sending, to a server, a first communication address that is of the first electronic device and that is based on the first wireless communication technology, and a second communication address that is of the first electronic device and that is based on the second wireless communication technology.

The first wireless communication address is, for example, a Bluetooth address of the first electronic device, and the second wireless communication address is, for example, a SparkLink address of the first electronic device.

The first wireless communication address and the second wireless communication address are real communication addresses of the first electronic device.

In this way, the first electronic device automatically uploads the Bluetooth address and/or the SparkLink address to the server, so that the second electronic device flexibly obtains the Bluetooth address and/or the SparkLink address of the first electronic device subsequently, to establish the Bluetooth connection or the SparkLink connection.

According to a second aspect, a communication method is provided, applied to a second electronic device, where the method includes: receiving a first broadcast sent by a first electronic device, where the first broadcast is a broadcast sent by the first electronic device based on a first wireless communication technology; obtaining first information carried in the first broadcast; and establishing, based on the first information, a communication connection to the first electronic device based on a second wireless communication technology, where the communication connection is used for the first electronic device to obtain a distance to the second electronic device in a first ranging manner corresponding to the communication connection when the second electronic device is located outside a vehicle, and the first electronic device is the vehicle or a processing module in the vehicle; and the communication connection is further used for the first electronic device to obtain the distance to the second electronic device in a second ranging manner corresponding to the communication connection when the second electronic device is located inside the vehicle, where ranging precision of the second ranging manner is less than ranging precision of the first ranging manner.

In this way, the second electronic device may not need to enable second wireless communication technology-based scanning by default, but may alternatively establish the second wireless communication technology-based communication connection based on scanning of the first wireless communication technology, to reduce power consumption of second wireless communication technology-based scanning.

In addition, a ranging manner is flexibly switched between inside the vehicle and outside the vehicle, to reduce power consumption and improve appropriate use of air interface resources while meeting a ranging requirement.

According to the second aspect, the first information includes at least one of the following: a first address that is of the first electronic device and that is based on the first wireless communication technology, a first indication indicating that the first electronic device supports the second wireless communication technology, and a second indication indicating that a second address carried in a broadcast sent by the first electronic device based on the second wireless communication technology is a random address.

For example, the Bluetooth broadcast sent by the first electronic device carries the Bluetooth address of the first electronic device.

For another example, when the first electronic device supports a SparkLink function, the sent Bluetooth broadcast may carry the first indication indicating that the first electronic device supports the SparkLink function.

For another example, a SparkLink broadcast sent by the first electronic device carries a random SparkLink address. In this case, the first electronic device may include, in the sent Bluetooth broadcast, the second indication indicating that the SparkLink address carried in the SparkLink broadcast sent by the first electronic device is a random address.

In this way, based on a plurality of implementations of the first information, the second electronic device can flexibly establish the communication connection to the second electronic device based on the second wireless communication connection technology subsequently.

According to the second aspect or any implementation of the second aspect, the first information includes the first address that is of the first electronic device and that is based on the first wireless communication technology; and establishing, based on the first information, the communication connection to the first electronic device based on the second wireless communication technology includes: obtaining at least one pair of locally stored communication addresses, where each pair of the at least one pair of communication addresses respectively corresponds to the first wireless communication technology and the second wireless communication technology; when the at least one pair of communication addresses includes a first communication address that is the same as the first address, obtaining a second communication address corresponding to the first communication address; and establishing the communication connection to the first electronic device based on the second communication address.

In this way, the second electronic device may not need to enable SparkLink scanning by default, to reduce power consumption of SparkLink scanning. In addition, the second electronic device can quickly determine, based on the SparkLink address found on a device side, the SparkLink broadcast sent by the first electronic device, to improve efficiency of establishing the SparkLink connection.

According to the second aspect or any implementation of the second aspect, establishing, based on the first information, the communication connection to the first electronic device based on the second wireless communication technology includes: when the first information includes the first indication, obtaining the first address included in the first information, where the first indication indicates that the first electronic device supports the second wireless communication technology; obtaining, from the at least one pair of locally stored communication addresses, the second communication address corresponding to the first communication address that is the same as the first address; and establishing the communication connection to the second electronic device based on the second communication address.

In this way, the second electronic device may not need to enable SparkLink scanning by default, to reduce power consumption of SparkLink scanning. In addition, the second electronic device can quickly determine, based on the SparkLink address found on the device side, the SparkLink broadcast sent by the first electronic device, to improve efficiency of establishing the SparkLink connection.

In addition, based on a first SparkLink indication, a process of determining whether the first electronic device has the SparkLink function is simplified.

According to the second aspect or any implementation of the second aspect, establishing, based on the first information, the communication connection to the first electronic device based on the second wireless communication technology includes: when the first information includes the second indication, scanning the broadcast sent based on the second wireless communication technology, to obtain a second broadcast sent by the first electronic device, where the second broadcast carries target content, and the second indication indicates that the second address carried in the broadcast sent by the first electronic device based on the second wireless communication technology is the random address; obtaining, from at least one pair of locally stored communication addresses, a second communication address corresponding to a first communication address that is the same as the first address included in the first information; and establishing the communication connection to the second electronic device based on the second communication address.

In this way, based on the second indication, the second electronic device establishes the SparkLink connection to the first electronic device in a random address scenario.

According to the second aspect or any implementation of the second aspect, before receiving the first broadcast sent by the first electronic device, the method further includes: downloading and storing the first communication address and the second communication address of the first electronic device from a server, where the first communication address corresponds to the first wireless communication technology, and the second communication address corresponds to the second wireless communication technology.

The first wireless communication address is, for example, a Bluetooth address of the first electronic device, and the second wireless communication address is, for example, a SparkLink address of the first electronic device.

The first wireless communication address and the second wireless communication address are real communication addresses of the first electronic device.

In this way, the second electronic device can obtain, from the server, a real communication address uploaded by the first electronic device, to simplify a subsequent process of establishing a communication connection between the second electronic device and the first electronic device. According to the second aspect or any implementation of the second aspect, the first ranging manner is any one or more of the following: Bluetooth channel sounding-based ranging, SparkLink low energy measurement, and multi-node ranging; and the second ranging manner is received signal strength indicator ranging and/or single-node ranging.

In this way, a plurality of flexible implementations of the first ranging manner and the second ranging manner meet power consumption reduction and increase flexibility of switching of the ranging manner.

According to a third aspect, a first electronic device is provided. The first electronic device includes a processor and a memory. The memory is coupled to the processor. The memory is configured to store computer program code. The computer program code includes computer instructions. When the processor reads the computer instructions from the memory, the first electronic device is enabled to perform: When a second electronic device is located outside a vehicle, the first electronic device obtains a distance to the second electronic device in a first ranging manner; and when the second electronic device is located inside the vehicle, the first electronic device obtains the distance to the second electronic device in a second ranging manner, where ranging precision of the second ranging manner is less than ranging precision of the first ranging manner. The first electronic device is the vehicle or a processing module in the vehicle. According to the third aspect, when the processor reads the computer instructions from the memory, the first electronic device is further enabled to perform: when it is detected that a vehicle door is opened, obtaining the distance to the second electronic device in the first ranging manner. According to the third aspect or any implementation of the third aspect, when the processor reads the computer instructions from the memory, the first electronic device is further enabled to perform: detecting that the vehicle door is closed; when the second electronic device is located inside the vehicle, obtaining the distance to the second electronic device in the second ranging manner; and when the second electronic device is located outside the vehicle, obtaining the distance to the second electronic device in the first ranging manner.

According to the third aspect or any implementation of the third aspect, the first ranging manner is any one or more of the following: Bluetooth channel sounding-based ranging, SparkLink low energy measurement, and multi-node ranging; and the second ranging manner is received signal strength indicator ranging and/or single-node ranging.

According to the third aspect or any implementation of the third aspect, when the processor reads the computer instructions from the memory, the first electronic device is further enabled to perform: The first electronic device determines whether the distance to the second electronic device is less than or equal to a first threshold; and when the distance between the first electronic device and the second electronic device is less than or equal to the first threshold, determines that the second electronic device is located inside the vehicle.

According to the third aspect or any implementation of the third aspect, that the first electronic device determines whether the distance to the second electronic device is less than or equal to the first threshold includes: The first electronic device determines, in any one or more of the first ranging manner, the second ranging manner, a connectionless ranging manner, ultrasonic positioning, and global satellite positioning, whether the distance to the second electronic device is less than or equal to the first threshold.

According to the third aspect or any implementation of the third aspect, when the processor reads the computer instructions from the memory, the first electronic device is further enabled to perform: sending a first broadcast based on a first wireless communication technology, where the first broadcast carries at least one of the following content: a first address that is of the first electronic device and that is based on the first wireless communication technology, a first indication indicating that the first electronic device supports a second wireless communication technology, and a second indication indicating that a second address carried in a broadcast sent by the first electronic device based on the second wireless communication technology is a random address, where the first broadcast is used to establish a wireless communication connection to the second electronic device based on the second wireless communication technology.

According to the third aspect or any implementation of the third aspect, when the processor reads the computer instructions from the memory, the first electronic device is further enabled to perform: sending, to a server, a first communication address that is of the first electronic device and that is based on the first wireless communication technology, and a second communication address that is of the first electronic device and that is based on the second wireless communication technology. According to a fourth aspect, a second electronic device is provided. The second electronic device includes a processor and a memory. The memory is coupled to the processor. The memory is configured to store computer program code. The computer program code includes computer instructions. When the processor reads the computer instructions from the memory, the second electronic device is enabled to perform: receiving a first broadcast sent by a first electronic device, where the first broadcast is a broadcast sent by the first electronic device based on a first wireless communication technology; obtaining first information carried in the first broadcast; and establishing, based on the first information, a communication connection to the first electronic device based on a second wireless communication technology, where the communication connection is used for the first electronic device to obtain a distance to the second electronic device in a first ranging manner corresponding to the communication connection when the second electronic device is located outside a vehicle, and the first electronic device is the vehicle or a processing module in the vehicle; and the communication connection is further used for the first electronic device to obtain the distance to the second electronic device in a second ranging manner corresponding to the communication connection when the second electronic device is located inside the vehicle, where ranging precision of the second ranging manner is less than ranging precision of the first ranging manner.

According to the fourth aspect, the first information includes at least one of the following: a first address that is of the first electronic device and that is based on the first wireless communication technology, a first indication indicating that the first electronic device supports the second wireless communication technology, and a second indication indicating that a second address carried in a broadcast sent by the first electronic device based on the second wireless communication technology is a random address.

According to the fourth aspect or any implementation of the fourth aspect, the first information includes the first address that is of the first electronic device and that is based on the first wireless communication technology; and establishing, based on the first information, the communication connection to the first electronic device based on the second wireless communication technology includes: obtaining at least one pair of locally stored communication addresses, where each pair of the at least one pair of communication addresses respectively corresponds to the first wireless communication technology and the second wireless communication technology; when the at least one pair of communication addresses includes a first communication address that is the same as the first address, obtaining a second communication address corresponding to the first communication address; and establishing the communication connection to the first electronic device based on the second communication address.

According to the fourth aspect or any implementation of the fourth aspect, establishing, based on the first information, the communication connection to the first electronic device based on the second wireless communication technology includes: when the first information includes the first indication, obtaining the first address included in the first information, where the first indication indicates that the first electronic device supports the second wireless communication technology; obtaining, from the at least one pair of locally stored communication addresses, the second communication address corresponding to the first communication address that is the same as the first address; and establishing the communication connection to the second electronic device based on the second communication address.

According to the fourth aspect or any implementation of the fourth aspect, establishing, based on the first information, the communication connection to the first electronic device based on the second wireless communication technology includes: when the first information includes the second indication, scanning the broadcast sent based on the second wireless communication technology, to obtain a second broadcast sent by the first electronic device, where the second broadcast carries target content, and the second indication indicates that the second address carried in the broadcast sent by the first electronic device based on the second wireless communication technology is the random address; obtaining, from at least one pair of locally stored communication addresses, a second communication address corresponding to a first communication address that is the same as the first address included in the first information; and establishing the communication connection to the second electronic device based on the second communication address.

According to the fourth aspect or any implementation of the fourth aspect, when the processor reads the computer instructions from the memory, the second electronic device is further enabled to perform: downloading and storing the first communication address and the second communication address of the first electronic device from a server, where the first communication address corresponds to the first wireless communication technology, and the second communication address corresponds to the second wireless communication technology. According to the fourth aspect or any implementation of the fourth aspect, the first ranging manner is any one or more of the following: Bluetooth channel sounding-based ranging, SparkLink low energy measurement, and multi-node ranging; and the second ranging manner is received signal strength indicator ranging and/or single-node ranging.

According to a fifth aspect, an electronic device is provided. The electronic device has a function of implementing the method according to the first aspect and any possible implementation of the first aspect; or the electronic device has a function of implementing the method according to the second aspect and any possible implementation of the second aspect. The function may be implemented by hardware, or may be implemented by hardware executing corresponding software. The hardware or the software includes one or more modules corresponding to the function. According to a sixth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect; or the electronic device is enabled to perform the method according to the second aspect or any implementation of the second aspect.

According to a seventh aspect, a computer program product is provided. When the computer program product runs on an electronic device, the electronic device is enabled to perform the method according to the first aspect or any implementation of the first aspect; or the electronic device is enabled to perform the method according to the second aspect or any implementation of the second aspect.

According to an eighth aspect, a circuit system is provided. The circuit system includes a processing circuit. The processing circuit is configured to perform the method according to the first aspect or any implementation of the first aspect; or the processing circuit is configured to perform the method according to the second aspect or any implementation of the second aspect. According to a ninth aspect, a chip system is provided, including at least one processor and at least one interface circuit. The at least one interface circuit is configured to perform a receiving/sending function, and send instructions to the at least one processor. When the at least one processor executes the instructions, the at least one processor performs the method according to the first aspect or any implementation of the first aspect; or the at least one processor performs the method according to the second aspect or any implementation of the second aspect.

For technical effects of the foregoing aspects, mutual reference may be made between the foregoing aspects. Details are not described herein again.

### BRIEF DESCRIPTION OF DRAWINGS

FIG. 1 is a diagram of a vehicle key use scenario according to an embodiment of this application;
FIG. 2 is a diagram of a communication system to which a communication method is applied according to an embodiment of this application;
FIG. 3 is a diagram of a hardware structure of a first electronic device according to an embodiment of this application;
FIG. 4 is a diagram of a communication node according to an embodiment of this application;
FIG. 5 is a schematic flowchart 1 of a communication method according to an embodiment of this application;
FIG. 6 is a schematic flowchart 2 of a communication method according to an embodiment of this application;
FIG. 7 is a schematic flowchart 3 of a communication method according to an embodiment of this application;
FIG. 8 is a schematic flowchart 4 of a communication method according to an embodiment of this application;
FIG. 9 is a schematic flowchart 5 of a communication method according to an embodiment of this application;
FIG. 10 is a schematic flowchart 6 of a communication method according to an embodiment of this application;
FIG. 11 is a diagram of a structure of a first electronic device according to an embodiment of this application;
FIG. 12 is a diagram of a structure of a second electronic device according to an embodiment of this application; and
FIG. 13 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include an expression like "one or more", unless otherwise specified in the context clearly. It should be further understood that in the following embodiments of this application, "at least one" and "one or more" mean one, two, or more.

Reference to "an embodiment", "some embodiments", or the like described in this specification represents that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In some embodiments, an electronic device (like a mobile phone, a watch, or a band) establishes a wireless communication connection to a vehicle based on a Bluetooth communication technology or SparkLink low energy (SparkLink low energy, SLE), and may control the vehicle via a vehicle key function through the wireless communication connection. Optionally, the vehicle establishes a Bluetooth connection to the electronic device, for example, a Bluetooth low energy (Bluetooth low energy, BLE) connection. Then, the vehicle may determine a distance between the electronic device and the vehicle through CS ranging. Optionally, after establishing an SLE connection to the electronic device, the vehicle may determine a distance between the electronic device and the vehicle through SLE measurement (SLE measurement, SLEM).

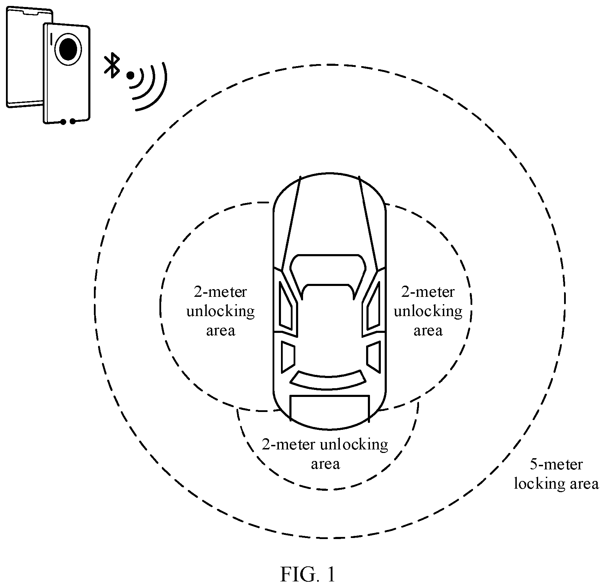

The vehicle measures the distance between the electronic device and the vehicle through CS ranging or SLEM, to implement a corresponding function. For example, as shown in FIG. 1, the electronic device is located outside the vehicle. When the vehicle detects the distance between the vehicle and the electronic device, to determine that the distance between the electronic device and the vehicle is less than or equal to 2 meters (or another distance threshold), automatic unlocking may be triggered, simplifying an unlocking step of a user. Alternatively, when it is determined that the distance between the electronic device and the vehicle is greater than or equal to 5 meters (or another distance threshold), automatic unlocking may be triggered, simplifying a locking step of the user. For another example, the electronic device is located inside the vehicle, the vehicle detects the distance between the vehicle and the electronic device, to determine a location of the electronic device inside the vehicle, so as to provide personalized services such as seat adjustment, air conditioner adjustment, and infotainment system setting for the user.

However, CS ranging or SLEM occupies a large quantity of air interface resources. If the ranging manner is still used after the electronic device is located inside the vehicle, linkage between the electronic device and another device will be affected. For example, linkage of an audio, a call, and the like between the electronic device and the vehicle is affected. For another example, the electronic device establishes a wireless communication connection to a keyboard and a mouse, and CS ranging or SLEM may affect communication quality of the wireless communication connection, resulting in affecting user experience.

In addition, currently, most vehicles are configured with a BLE function, and only some vehicles are configured with an SLE function. In this case, if the electronic device uses an SLE key, the electronic device needs to scan both a BLE broadcast and an SLE broadcast sent by the vehicle, to ensure that the electronic device can remain forward compatibility with the vehicle configured with only the BLE function, and provide a user of the vehicle with use experience of a corresponding vehicle key. However, simultaneously scanning the BLE broadcast and the SLE broadcast may increase power consumption of the electronic device.

In this way, this application provides a communication method and an electronic device. According to the technical solution provided in this application, a ranging manner can be adaptively switched based on whether a user gets in a vehicle, so that after the user gets in the vehicle, air interface resources occupied by a ranging function can be reduced, to avoid affecting communication quality of another device in the vehicle.

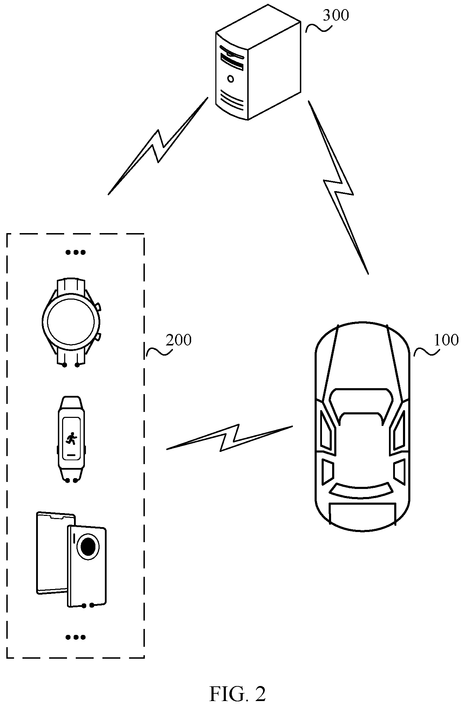

FIG. 2 is a diagram of a communication system to which a communication method is applied according to an embodiment of this application. As shown in FIG. 2, the communication system includes a first electronic device 100 and a second electronic device 200.

Optionally, the first electronic device 100 may be specifically a terminal like a head unit (which may also be described as a vehicle terminal), an intelligent cockpit, or a vehicle. An operating system installed on the first electronic device 100 includes but is not limited to iOS^{®}, Android^{®}, Harmony^{®}, Windows^{®}, Linux^{®}, or another operating system. Alternatively, an operating system may not be installed on the first electronic device 100. A specific type of the first electronic device 100, whether an operating system is installed on the first electronic device 100, and an operating system installed on the first electronic device 100 all are not limited in embodiments of this application.

Optionally, the second electronic device 200 may be, for example, a wearable device like a smartwatch, a smart band, a smart ring, or smart glasses, or may be a mobile terminal device like a mobile phone, a tablet computer, a notebook computer, an ultra-mobile personal computer (ultra-mobile personal computer, UMPC), a netbook, a personal digital assistant (personal digital assistant, PDA), or an artificial intelligence (artificial intelligence, AI) device. An operating system installed on the second electronic device 200 includes but is not limited to iOS^{®}, Android^{®}, Harmony^{®}, Windows^{®}, Linux^{®}, or another operating system. A specific type of the second electronic device 200 and an operating system installed on the second electronic device 200 are not limited in this application.

In some embodiments, a user carries the second electronic device 200 to approach or move away from the first electronic device 100, and the first electronic device 100 detects a distance to the second electronic device 200 in a first ranging manner. The first electronic device 100 determines, based on a change of the distance, whether to unlock or lock. For example, if the first electronic device 100 determines that the distance to the second electronic device 200 is less than or equal to a threshold A, for example, 3 meters or 2 meters, automatic unlocking may be triggered. For another example, if the first electronic device 100 determines that the distance to the second electronic device 200 is greater than or equal to a threshold B, for example, 5 meters or 6 meters, automatic locking may be triggered.

In some embodiments, the first electronic device 100 can obtain a vehicle door status, for example, open or closed. Optionally, the first electronic device 100 may determine, based on the distance to the second electronic device 200 and the vehicle door status, whether the second electronic device 200 is located inside the vehicle. When the second electronic device 200 is located inside the vehicle, the distance to the second electronic device 200 may be measured in a second ranging manner. Optionally, compared with the first ranging manner, the second ranging manner can reduce air interface resource occupation and reduce power consumption.

In some embodiments, as shown in FIG. 2, the communication system may further include a server 300. Optionally, the server 300 may be a device or a server with a computing function, for example, a cloud server or a network server. The server 300 may be a server, a server cluster including a plurality of servers, or a cloud computing service center.

In some embodiments, the first electronic device 100 may send a Bluetooth address or a SparkLink address of the first electronic device 100 to the server 300. Optionally, the second electronic device 200 may download the Bluetooth address and the SparkLink address of the first electronic device 100 from the server 300.

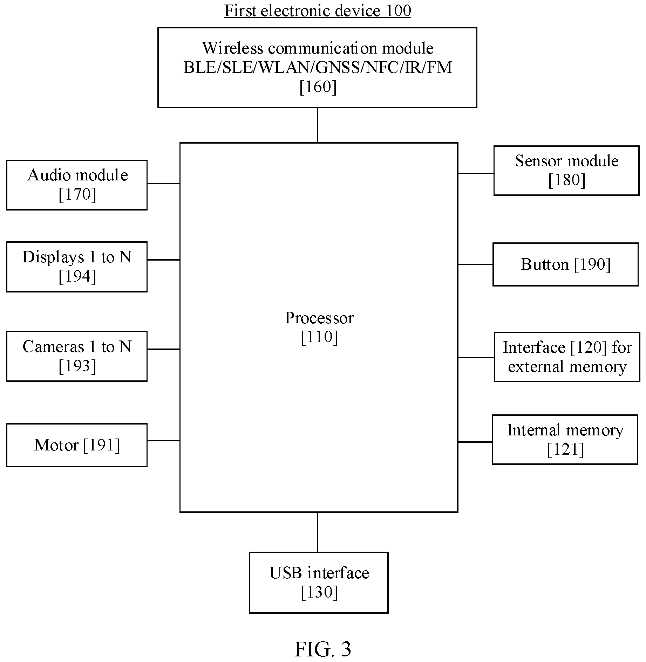

Optionally, the first electronic device 100, the second electronic device 200, and the server 300 in this embodiment of this application may be implemented by using different devices. Different devices may have a same hardware structure, a similar hardware structure, or different hardware structures, for example, a hardware structure shown in FIG. 3.

For example, an example in which the first electronic device 100 has the hardware structure shown in FIG. 3 is used to describe the hardware structure shown in FIG. 3.

As shown in FIG. 3, the first electronic device 100 may include a processor 110, an interface 120 for external memory, an internal memory 121, a universal serial bus (universal serial bus, USB) interface 130, a wireless communication module 160, an audio module 170, a sensor module 180, a button 190, a motor 191, a camera 193, a display 194, and the like.

It may be understood that a structure shown in this embodiment of this application does not constitute a specific limitation on the first electronic device 100. In some other embodiments of this application, the first electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instruction or the data again, the processor may directly invoke the instruction or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the first electronic device 100. In some other embodiments of this application, the first electronic device 100 may alternatively use an interface connection manner different from that in the foregoing embodiment, or use a combination of a plurality of interface connection manners.

A wireless communication function of the first electronic device 100 may be implemented through the antenna, the wireless communication module 160, the modem processor, the baseband processor, and the like.

The antenna is configured to transmit/receive an electromagnetic wave signal. Each antenna in the first electronic device 100 may be configured to cover one or more communication bands. Different antennas may be further reused, to improve antenna utilization. For example, the antenna may be reused as a diversity antenna of a wireless local area network. In some other embodiments, the antenna may be used in combination with a tuning switch.

The wireless communication module 160 may provide a wireless communication solution that is applied to the first electronic device 100 and that includes BLE, SLE, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna.

In some embodiments, the first electronic device 100 may communicate with a network and another device based on a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, BLE, SLE, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some embodiments, a communication node is configured on the first electronic device 100, and the communication node may be configured to implement a communication function, a ranging function, and the like of the first electronic device 100. Optionally, the communication node includes a primary communication node and a secondary communication node. The first electronic device 100 may establish a communication connection to another electronic device (for example, the second electronic device 200) through the primary communication node, and perform ranging, to obtain a distance between the second electronic device 200 and the first electronic device 100. After determining that the communication connection is established, the primary communication node may wake up the secondary communication node, trigger ranging of the secondary communication node, and obtain ranging data of the secondary communication node. In this way, the primary communication node can output a more accurate ranging result with reference to a plurality of pieces of ranging data.

Optionally, at least one communication node included in the wireless communication module 160 of the first electronic device 100 is configured to implement the wireless communication function of the first electronic device 100. For example, a communication node configured on the first electronic device 100 includes, for example, a BLE node, an SLE node, and an ultra-wideband (ultra-wideband, UWB) node.

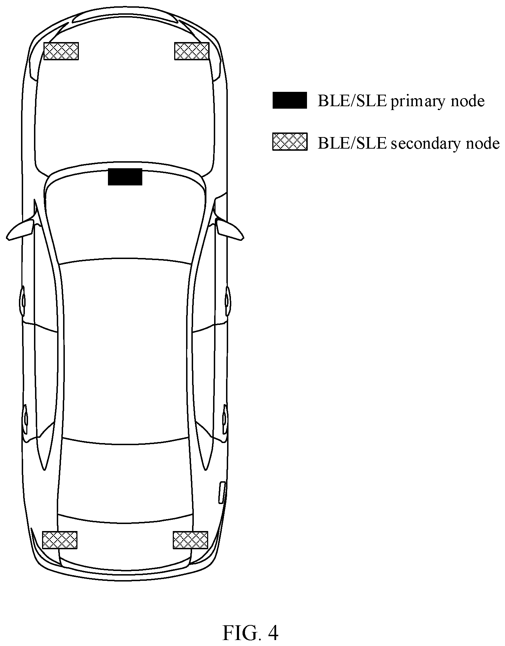

For example, as shown in FIG. 4, the first electronic device 100 is a vehicle, and a BLE/SLE primary node is configured on the vehicle. Optionally, a BLE/SLE secondary node is further configured at four corners of the vehicle. Optionally, the BLE/SLE node is configured to implement a Bluetooth/SparkLink communication function, a ranging function, and the like of the vehicle. Optionally, a UWB node may be further configured on the vehicle. Optionally, the UWB node is configured to implement a ranging function, a positioning function, and the like of the vehicle.

It should be understood that the BLE node and the SLE node may be configured at a same location or different locations on the vehicle. For example, as shown in FIG. 4, the BLE node and the SLE node are configured at the four corners of the vehicle; or the BLE node is configured at two corners of the vehicle, and the SLE node is configured at the other two corners. For another example, the BLE node is configured on but the SLE node is not configured on the vehicle; or the SLE node is configured on but the BLE node is not configured on the vehicle.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (such as audio data and an address book) created during use of the first electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS). The processor 110 runs the instructions stored in the internal memory 121 and/or instructions stored in the memory disposed in the processor, to perform various function applications and data processing of the first electronic device 100.

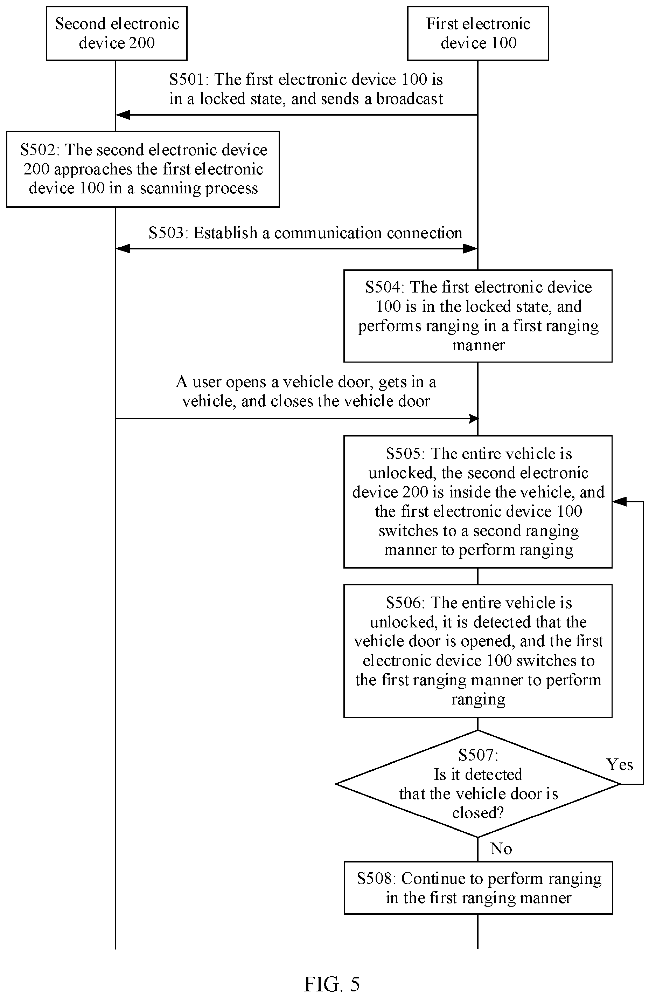

FIG. 5 is a schematic flowchart of a communication method according to an embodiment of this application. It should be noted that the method is not limited to a specific sequence described in FIG. 5 and below. It should be understood that in another embodiment, a sequence of some steps in the method may be exchanged based on an actual requirement, or some steps in the method may be omitted or deleted. The method includes the following steps.

S501: A first electronic device 100 is in a locked state, and sends a broadcast.

The locked state means that a vehicle door is closed and locked.

In some embodiments, when the first electronic device 100 is in the locked state, another electronic device on which a vehicle key function is installed may implement automatic unlocking of the first electronic device 100 via the vehicle key function. After the first electronic device 100 establishes a wireless communication connection to the another electronic device, vehicle key-based automatic unlocking of the first electronic device 100 may be implemented. In this case, the first electronic device 100 may send a broadcast, to establish a communication connection to the another electronic device.

It should be understood that the first electronic device 100 is not limited to sending a broadcast in the locked state. For example, when the first electronic device 100 is in an unlocked state, the first electronic device 100 may still send a broadcast.

In some embodiments, a BLE node and/or an SLE node are/is configured on the first electronic device 100, to implement a wireless communication function of the first electronic device 100. After being started, the first electronic device 100 may send a wireless communication broadcast, to connect to the another electronic device around the first electronic device 100 or inside a vehicle. Optionally, the first electronic device 100 sends a Bluetooth broadcast, to establish a Bluetooth connection to the another electronic device. Optionally, after the Bluetooth connection is established, the first electronic device 100 may obtain a distance between the another electronic device and the first electronic device 100 through CS ranging.

It should be understood that the first electronic device 100 may further send a SparkLink broadcast, to establish a SparkLink connection to the another electronic device. Optionally, after the SparkLink connection is established, the first electronic device 100 may obtain the distance between the another electronic device and the first electronic device 100 through SLEM. The following describes a switching process of a ranging manner between the first electronic device 100 and the second electronic device 200 by using an example in which the first electronic device 100 establishes a Bluetooth connection to the second electronic device 200 and performs CS ranging through the Bluetooth connection. For a SparkLink connection-based SLEM process, refer to related content. Details are not described herein again.

Optionally, the Bluetooth broadcast may carry information about the first electronic device 100, for example, a Bluetooth address, a Bluetooth name, and a name (for example, a vehicle name) of the first electronic device 100.

S502: The second electronic device 200 approaches the first electronic device 100 in a scanning process.

In some embodiments, the second electronic device 200 enables a Bluetooth function, and scans, based on a specific period, a surrounding Bluetooth broadcast that may exist. Optionally, in a process in which a user carries the second electronic device 200 to approach the first electronic device 100, the second electronic device 200 may receive a Bluetooth signal broadcast by the first electronic device 100, to trigger establishment of a Bluetooth connection, so as to facilitate subsequent implementation of the vehicle key function like automatic unlocking.

S503: The first electronic device 100 establishes a communication connection to the second electronic device 200.

In some embodiments, a BLE node is configured on both the first electronic device 100 and the second electronic device 200. A Bluetooth connection between the first electronic device 100 and the second electronic device 200 may be established through pairing and connection of BLE nodes between the devices.

In some examples, an establishment process of the Bluetooth connection includes, for example, at least a pairing process and a connection process. After enabling the Bluetooth function, the first electronic device 100 and the second electronic device 200 may discover each other through Bluetooth near field communication. Then, the first electronic device 100 and the second electronic device 200 may enter the pairing process. In the pairing process, the first electronic device 100 may display, through interaction with the second electronic device 200, a randomly generated pairing code, for example, a personal identification number (personal identification number, PIN). Then, the first electronic device 100 (or the second electronic device 200) may determine, based on a confirmation operation of the user, that the first electronic device 100 and the second electronic device 200 currently display the same pairing code, determine that the peer device is a trusted device, and trigger entering of the connection process. Optionally, in the pairing process, after determining, based on the user operation, that the pairing code is correct, the first electronic device 100 may further complete exchange of a security key through interaction with the second electronic device 200. The security key may be used to encrypt data subsequently exchanged between the first electronic device 100 and the second electronic device 200 through the Bluetooth connection. In this way, security of Bluetooth communication between the first electronic device 100 and the second electronic device 200 is ensured through the pairing process. Then, after determining that the pairing process with the second electronic device 200 is completed, the first electronic device 100 may enter the connection process, and establish the Bluetooth connection to the second electronic device 200.

Optionally, after establishing the Bluetooth connection to the second electronic device 200, the first electronic device 100 may store pairing information of the second electronic device 200. Optionally, the pairing information includes, for example, information such as a device identifier, a Bluetooth identifier, and a Bluetooth address of the second electronic device 200.

Optionally, after the first electronic device 100 establishes the Bluetooth connection to the second electronic device 200 for the first time, subsequently, the first electronic device 100 and the second electronic device 200 may directly perform the connection process based on the stored pairing information when finding the peer device through scanning, to trigger establishment of the Bluetooth connection.

S504: The first electronic device 100 is in the locked state, and performs ranging in a first ranging manner.

S505: The entire vehicle is unlocked, the second electronic device 200 is inside the vehicle, and the first electronic device 100 switches to a second ranging manner to perform ranging. Compared with the second ranging manner, the first ranging manner has higher ranging precision, but occupies more air interface resources, and correspondingly has higher power consumption. For example, the first ranging manner is CS ranging (or SLEM), and the second ranging manner is received signal strength indicator (received signal strength indicator, RSSI) ranging.

In some embodiments, the Bluetooth connection is established between the first electronic device 100 and the second electronic device 200, and the first electronic device 100 and the second electronic device 200 may exchange a radio signal through the Bluetooth connection, to implement communication. The first electronic device 100 and/or the second electronic device 200 may obtain, based on a wavelength and a channel status of the radio signal, the distance between the devices based on a CS ranging technology. A relationship between the wavelength λ and a frequency f of the radio signal may be described by using a speed of light c. For example, a higher frequency indicates a shorter wavelength. In a communication process, the radio signal is affected by a plurality of factors on a radio channel, such as a path loss, reflection, scattering, and interference. Information about the channel state may be obtained by analyzing these factors.

Optionally, in wireless ranging, an electronic device obtains a distance between devices by using phase differences or delay differences of a radio signal. The phase difference or the delay difference is directly related to a wavelength. For example, based on a phase difference method, when there is a specific distance between a transmitter and a receiver, a phase difference is generated during propagation of the radio signal. A path difference of propagation of the radio signal can be calculated by measuring the phase difference of the radio signal, and then the distance can be estimated. For another example, based on a delay difference method, the distance between devices can be calculated by measuring a propagation delay of the radio signal and combining a wave speed (namely, a propagation speed of an electromagnetic wave in a medium) and a frequency of the radio signal.

For example, in the communication process, the first electronic device 100 communicates with the second electronic device 200 based on a 2.4 GHz (Hz) frequency of Bluetooth communication. The 2.4 GHz frequency has 80 frequencies. The first electronic device 100 may send one radio signal to the second electronic device 200 at each frequency, and the second electronic device 200 also feeds back a corresponding radio signal to the first electronic device 100. In this case, the first electronic device 100 may obtain the distance between the first electronic device 100 and the second electronic device 200 based on the phase difference method, that is, implement CS ranging. In some embodiments, the second ranging manner is RSSI ranging. In a process of propagation of the radio signal in the air, strength of the radio signal attenuates as a propagation distance increases. In this case, the electronic device may obtain a distance between a signal source and a receive device by measuring an RSSI value. A relationship between the strength of the radio signal and the distance is usually non-linear and is affected by environmental factors, such as multipath propagation and obstacles.

For example, the first electronic device 100 sends a radio signal to the second electronic device 200, and receives a radio signal fed back by the second electronic device 200. The first electronic device 100 may obtain the distance between the first electronic device 100 and the second electronic device 200 based on a change between RSSI values of the radio signals between devices. In some embodiments, in a process in which the first electronic device 100 is in the locked state, the first electronic device 100 establishes the Bluetooth connection to the second electronic device 200 that is close to the first electronic device 100. In this process, the second electronic device 200 is located outside the first electronic device 100, for example, located outside the vehicle. In this case, the first electronic device 100 may measure the distance to the second electronic device 200 in the first ranging manner, to implement a ranging result with higher precision. Subsequently, the user opens the vehicle door, gets in the vehicle, and closes the vehicle door. The first electronic device 100 may switch to the second ranging manner, to measure the distance to the second electronic device 200, so as to reduce air interface resource occupation, avoid affecting communication between another electronic device and the second electronic device 200 in the vehicle, and reduce power consumption.

For example, the first electronic device 100 may switch the ranging manner from CS ranging to RSSI ranging.

After the user gets in the vehicle and closes the vehicle door, it indicates that the user is inside the vehicle within a specific time. Therefore, the first electronic device 100 may switch to the second ranging manner. Alternatively, the first electronic device 100 only needs to determine that the user gets in the vehicle, and then may switch to the second ranging manner. Optionally, the first electronic device 100 can determine, based on the distance to the second electronic device 200, whether the user gets in the vehicle.

In this way, the ranging manner is flexibly switched between inside the vehicle and outside the vehicle, to reduce power consumption and improve appropriate use of air interface resources while meeting a ranging requirement.

Optionally, the first electronic device 100 can obtain an open or closed state of the vehicle door through vehicle door detection. For example, a sensor is mounted on the vehicle door, and the first electronic device 100 may obtain the open or closed state of the vehicle door based on detection data of the sensor, to determine whether the user opens or closes the vehicle door. The sensor is, for example, a pressure sensor, an electromagnetic induction sensor, or a door magnetic switch (for example, a door switch sensor).

Optionally, the first electronic device 100 can determine, based on the distance to the second electronic device 200 and the open/closed state of the vehicle door, that the user closes the vehicle door after opens the vehicle door and gets in the vehicle, and the second electronic device 200 (for example, a vehicle key) is inside the vehicle.

In some embodiments, the first electronic device 100 may determine, based on the distance to the second electronic device 200, whether the second electronic device 200 is located inside or outside the vehicle. Alternatively, the first electronic device 100 may determine, in another positioning manner, whether the second electronic device 200 is located inside or outside the vehicle. For example, the first electronic device 100 determines a location of the second electronic device 200 in a manner like ultrasonic positioning or GPS positioning, to further determine whether the second electronic device 200 is located inside or outside the vehicle.

For example, the second electronic device 200 is configured with a GPS function, and can obtain GPS positioning information. The first electronic device 100 may request the GPS positioning information from the second electronic device 200, to determine the location of the second electronic device 200, so as to determine whether the second electronic device 200 is located inside or outside the vehicle. For example, if a deviation between GPS positioning of the second electronic device 200 and GPS positioning of the first electronic device 100 is within a preset threshold (for example, a distance is less than a preset threshold), it may be determined that the second electronic device 200 is located inside the vehicle.

In this way, the first electronic device 100 also flexibly determines, in a plurality of manners, whether the second electronic device 200 is located inside the vehicle, to trigger switching of the ranging manner.

The following uses an example in which the first electronic device 100 may determine, based on the distance to the second electronic device 200, whether the second electronic device 200 is located inside the vehicle or outside the vehicle, to describe various switching scenarios of the ranging manner.

In some embodiments, the first electronic device 100 measures the distance to the second electronic device 200 independently. Alternatively, both the first electronic device 100 and the second electronic device 200 measure the distance to the peer device, and the second electronic device 200 sends a measurement result to the first electronic device 100. In this way, the first electronic device 100 can obtain a more accurate ranging result between the first electronic device 100 and the second electronic device 200 with reference to a measurement result of the first electronic device 100 and the measurement result of the second electronic device 200. Optionally, when both the first electronic device 100 and the second electronic device 200 measure the distance to the peer device, after switching the ranging manner, the first electronic device 100 may also indicate the second electronic device 200 to switch the ranging manner or stop ranging. In this way, after the first electronic device 100 switches the ranging manner, the second electronic device 200 can be prevented from still performing ranging in the original ranging manner, to avoid unnecessary power consumption.

In some embodiments, connectionless ranging may alternatively be implemented between the first electronic device 100 and the second electronic device 200, that is, step S503 is an optional step. For example, in step S502, the second electronic device 200 scans a broadcast signal sent by the peer device and the first electronic device 100 scans a broadcast signal sent by the peer device. In this case, the first electronic device 100 may also determine a change of the distance to the second electronic device 200 based on received broadcast signal strength. Optionally, the first ranging manner may alternatively be a connectionless ranging manner. For example, when the second electronic device 200 is located outside the vehicle, the first electronic device 100 obtains the distance to the second electronic device 200 in a connectionless CS ranging manner. The connectionless CS ranging manner includes, for example, a manner of determining a distance based on Bluetooth broadcast signal strength.

In this way, based on connectionless ranging, occupation of device resources can also be reduced, and power consumption can be reduced.

S506: The entire vehicle is unlocked, it is detected that the vehicle door is opened, and the first electronic device 100 switches to the first ranging manner to perform ranging.

In some embodiments, in a process in which the user carries the second electronic device 200 inside the vehicle, there may be a requirement for getting out of the vehicle. In this case, the user unlocks the vehicle (for example, the first electronic device 100) and opens the vehicle door. Correspondingly, the first electronic device 100 may detect that the vehicle is unlocked and the vehicle door is opened. In this case, the first electronic device 100 switches the ranging manner from the second ranging manner to the first ranging manner. In this way, it is convenient to obtain a more accurate ranging result subsequently.

For example, the first electronic device 100 detects that the entire vehicle is unlocked and detects that the vehicle door is opened, and may switch the ranging manner from RSSI ranging to CS ranging.

S507: The first electronic device 100 determines whether it is detected that the vehicle door is closed. If it is detected that the vehicle door is closed, step S505 is performed; or if it is not detected that the vehicle door is closed, step S508 is performed.

S508: The first electronic device 100 continues to perform ranging in the first ranging manner.

In some embodiments, after detecting that the vehicle door is opened, the first electronic device 100 continues to perform ranging in the first ranging manner. In this process, the first electronic device 100 may detect that the vehicle door is closed. If the first electronic device 100 detects that the vehicle door is closed, there may be two cases. In one case, the user closes the vehicle door without getting out of the vehicle. In the other case, the user closes the vehicle door after getting out of the vehicle. In this case, in step S507, after detecting that the vehicle door is closed, step S505 is returned to perform, and the first electronic device 100 determines whether the second electronic device 200 is inside the vehicle.

If the second electronic device 200 is still inside the vehicle, the first electronic device 100 may switch the ranging manner from the first ranging manner back to the second ranging manner. For example, the first electronic device 100 switches the ranging manner from CS ranging to RSSI ranging. In this way, a ranging requirement of the first electronic device 100 can be met, and air interface resource occupation and power consumption caused by ranging can be reduced. For example, after the vehicle door is opened, the user carrying the second electronic device 200 does not get out of the vehicle, but another user gets out of the vehicle or no user gets out of the vehicle. In this case, the first electronic device 100 still uses RSSI ranging, and can obtain better communication effect.

If the second electronic device 200 is outside the vehicle, the first electronic device 100 may continue to perform ranging in the first ranging manner. In this way, a more accurate ranging result can be obtained. For example, the first electronic device 100 continues to perform CS ranging, to obtain the ranging result between the first electronic device 100 and the second electronic device 200.

Optionally, the first electronic device 100 may determine, based on the ranging result between the first electronic device 100 and the second electronic device 200, whether the second electronic device 200 is located inside the vehicle.

In this way, the first electronic device 100 can flexibly switch the ranging manner based on whether the second electronic device 200 is located inside the vehicle, to reduce power consumption and improve appropriate occupation of an air interface while meeting a ranging requirement.

In addition, when implementing the vehicle key function, the second electronic device 200 can be connected to another Bluetooth device and SparkLink device, to meet a corresponding scenario requirement. For example, the second electronic device 200 is connected to an audio Bluetooth device, so that the second electronic device 200 smoothly plays an audio through the audio Bluetooth device.

In some embodiments, in step S506, after detecting that the entire vehicle is unlocked and detecting that the vehicle door is opened, the first electronic device 100 may switch the ranging manner from the second ranging manner to the first ranging manner. Alternatively, in another implementation, the first electronic device 100 may determine, based on the change of the distance to the second electronic device 200, whether the ranging manner needs to be switched. For example, in a process of performing ranging in the second ranging manner, the first electronic device 100 obtains that the distance to the second electronic device 200 exceeds the preset threshold, and may determine that the second electronic device 200 is not inside the vehicle. In this case, the first electronic device 100 may also trigger switching of the ranging manner from the second ranging manner to the first ranging manner. Alternatively, after the first electronic device 100 detects that the entire vehicle is unlocked and determines that the distance to the second electronic device 200 exceeds the preset threshold, the first electronic device 100 triggers switching of the ranging manner from the second ranging manner to the first ranging manner. Alternatively, after the first electronic device 100 detects that the entire vehicle is unlocked and the vehicle door is opened, and determines that the distance to the second electronic device 200 exceeds the preset threshold, the first electronic device 100 triggers switching of the ranging manner from the second ranging manner to the first ranging manner. In this way, the ranging manner is flexibly switched with reference to a change of the vehicle door status and/or the distance between devices.

For example, the first electronic device 100 determines, by determining whether the second electronic device 200 is inside the vehicle, whether to switch the ranging manner. For example, the first electronic device 100 determines that the second electronic device 200 moves from outside the vehicle to inside the vehicle, and may switch the ranging manner from the first ranging manner to the second ranging manner. For another example, the first electronic device 100 determines that the second electronic device 200 moves from inside the vehicle to outside the vehicle, and may switch the ranging manner from the second ranging manner to the first ranging manner.

In some embodiments, as shown in FIG. 4, a plurality of BLE/SLE nodes may be configured on the first electronic device 100. Mutual cooperation between the plurality of communication nodes (which may be described as multi-node for short) can improve accuracy of the ranging result. For example, after obtaining a ranging result, a secondary communication node may send the ranging result to a primary communication node. In this way, the primary communication node can output a final ranging result with reference to a ranging result of the primary communication node and the ranging result of the secondary communication node, and accuracy of the ranging result is higher. However, multi-node ranging may cause more power consumption and occupy more air interface resources. Based on the foregoing descriptions of the scenario of flexible switching between the first ranging manner and the second ranging manner, the first electronic device 100 may also flexibly switch between single-node ranging and multi-node ranging based on whether the second electronic device 200 is located inside the vehicle.

Optionally, the first ranging manner is multi-node ranging, and the second ranging manner is single-node ranging. The multi-node ranging refers to performing ranging by using a plurality of BLE nodes (or SLE nodes), and the single-node ranging refers to performing ranging by using a single BLE node (or SLE node). The single node is, for example, the primary communication node of the first electronic device 100.

For example, when the first electronic device 100 and the second electronic device 200 establish a communication connection, and the second electronic device 200 is located outside the vehicle that is locked, the first electronic device 100 may obtain a ranging result in the first ranging manner (for example, a multi-node ranging manner). Subsequently, the entire vehicle is unlocked, the user opens the vehicle door and gets in the vehicle, and the second electronic device 200 is located inside the vehicle. In this case, the first electronic device 100 may obtain a ranging result in the second ranging manner (for example, a single-node ranging manner). Then, the entire vehicle is unlocked and the user opens the vehicle door. In this case, the first electronic device 100 may obtain a ranging result in the first ranging manner, for example, the multi-node ranging manner. Then, after the first electronic device 100 detects that the door is closed, if the second electronic device 200 is located outside the vehicle, the first electronic device 100 may continue to obtain a ranging result in the first ranging manner (for example, the multi-node ranging manner). If the second electronic device 200 is located inside the vehicle, the first electronic device 100 may obtain a ranging result in the second ranging manner (for example, the single-node ranging manner).

In this way, the first electronic device 100 flexibly switches between single-node ranging and multi-node ranging, to reduce power consumption and improve appropriate occupation of an air interface while meeting a ranging requirement.

In addition, when implementing the vehicle key function, the second electronic device 200 can be connected to another Bluetooth device and SparkLink device, to meet a corresponding scenario requirement. For example, the second electronic device 200 is connected to an audio Bluetooth device, so that the second electronic device 200 smoothly plays an audio through the audio Bluetooth device.

In some embodiments, with reference to the content described above, the first ranging manner is any one or more of the following: CS ranging, SLEM, and multi-node ranging. The second ranging manner is RSSI ranging and/or single-node ranging.

For example, the first ranging manner is multi-node CS ranging, and the second ranging manner is single-node RSSI ranging. For another example, the first ranging manner is multi-node SLEM, and the second ranging manner is single-node SLEM.

In this way, a plurality of flexible implementations of the first ranging manner and the second ranging manner meet power consumption reduction and increase flexibility of switching of the ranging manner.

In some embodiments, the first electronic device 100 is configured with a Bluetooth function, and may establish a Bluetooth connection to another device. Optionally, with development of terminal technologies, some first electronic devices 100 are configured with a SparkLink function, and may establish a SparkLink connection to another device. Optionally, in the process in which the second electronic device 200 scans a nearby device in step S502, the second electronic device 200 generally simultaneously enables Bluetooth scanning and SparkLink scanning, so that when the first electronic device 100 is configured with the SparkLink function, the second electronic device 200 establishes a SparkLink connection to the first electronic device 100, and when the first electronic device 100 is not configured with the SparkLink function, the second electronic device 200 may also establish a Bluetooth connection to the first electronic device 100. In this way, a requirement for wireless communication between the second electronic device 200 and the first electronic device 100 is met. However, simultaneously enabling Bluetooth scanning and SparkLink scanning increases power consumption of the second electronic device 200, and affects a battery life of the second electronic device 200. In this case, according to the communication method provided in this embodiment of this application, whether SparkLink scanning needs to be enabled can be determined by first enabling Bluetooth scanning, to reduce power consumption in the scanning process, implement forward compatibility with the first electronic device 100 that supports the Bluetooth function, and also implement backward compatibility with the first electronic device 100 with added support for the SparkLink scanning function.

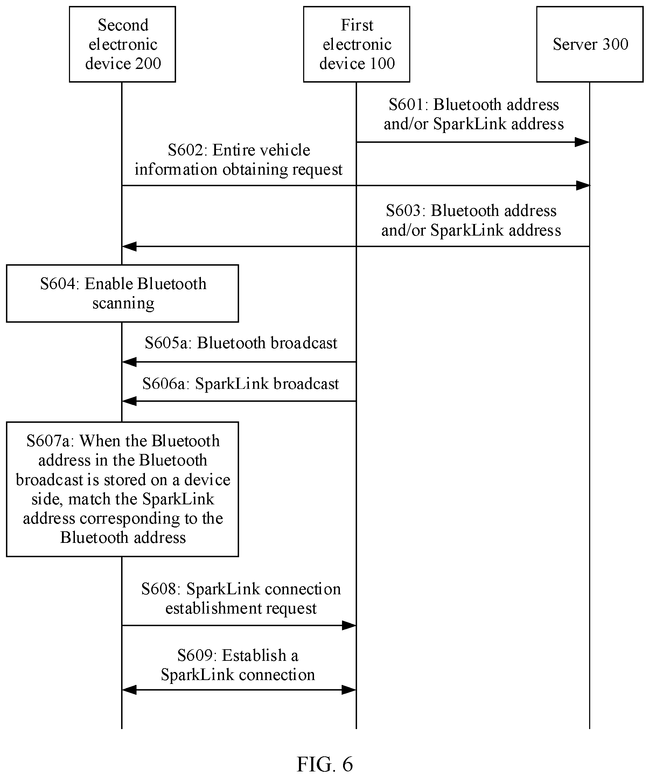

FIG. 6 is a schematic flowchart of another communication method according to an embodiment of this application. It should be noted that the method is not limited to a specific sequence described in FIG. 6 and below. It should be understood that in another embodiment, a sequence of some steps in the method may be exchanged based on an actual requirement, or some steps in the method may be omitted or deleted. The method includes the following steps.

S601: A first electronic device 100 sends a Bluetooth address and/or a SparkLink address to a server 300.

In some embodiments, the first electronic device 100 is configured with a Bluetooth function. In this case, the first electronic device 100 has the corresponding Bluetooth address, and the first electronic device 100 may send the Bluetooth address of the first electronic device 100 to the server 300.

Optionally, the first electronic device 100 is configured with a SparkLink function. In this case, the first electronic device 100 has a corresponding SparkLink address, and the first electronic device 100 may send the SparkLink address of the first electronic device 100 to the server 300. For example, the first electronic device 100 sends the Bluetooth address and the SparkLink address of the first electronic device 100 to the server 300 after being started for the first time. Alternatively, the first electronic device 100 is not configured with the SparkLink function. In this case, the first electronic device sends the Bluetooth address of the first electronic device to the server 300 after being started for the first time.

In some embodiments, the Bluetooth address is used by another device to establish a Bluetooth connection to the first electronic device 100. Optionally, the SparkLink address is used by another device to establish a SparkLink connection to the first electronic device 100.

S602: A second electronic device 200 sends an entire vehicle information obtaining request to the server 300.

S603: The server 300 sends the Bluetooth address and/or the SparkLink address to the second electronic device 200.

In some embodiments, the second electronic device 200 is configured with a vehicle key function. When the vehicle key function is enabled for the first time, the second electronic device 200 may be bound to a corresponding vehicle based on a user operation. For example, the second electronic device 200 may send the entire vehicle information obtaining request, to obtain entire vehicle information from the server 300.

Optionally, the entire vehicle information includes, for example, information such as the Bluetooth address and/or the SparkLink address, a Bluetooth name, a SparkLink name, and a vehicle name of the first electronic device 100.

In some embodiments, after obtaining the Bluetooth address and/or the SparkLink address, the second electronic device 200 stores the Bluetooth address and/or the SparkLink address.

Optionally, after obtaining the Bluetooth address and the SparkLink address, the second electronic device 200 may store the Bluetooth address and the SparkLink address, and a correspondence between the Bluetooth address and the SparkLink address.

It should be understood that step S601 to step S603 are not strongly bound to the following steps. To be specific, the second electronic device 200 does not need to request, from the server 300, the Bluetooth address and/or the SparkLink address of the first electronic device 100 before each scanning.

S604: The second electronic device 200 enables Bluetooth scanning.

In some embodiments, the second electronic device 200 enables the Bluetooth function, and scans, based on a specific period, a surrounding Bluetooth broadcast that may exist, to facilitate establishment of the Bluetooth connection.

S605a: The first electronic device 100 sends a Bluetooth broadcast.

S606a: The first electronic device 100 sends a SparkLink broadcast.

In some embodiments, when the first electronic device 100 has the Bluetooth function, the first electronic device 100 sends the Bluetooth broadcast based on a specific period, so that another device accesses the first electronic device 100 through the Bluetooth connection. When the first electronic device 100 has the SparkLink function, the first electronic device 100 sends the SparkLink broadcast based on a specific period, so that another device accesses the first electronic device 100 through the SparkLink connection.

Optionally, the Bluetooth broadcast sent by the first electronic device 100 carries the Bluetooth address of the first electronic device 100.

Optionally, the SparkLink broadcast sent by the first electronic device 100 carries the SparkLink address of the first electronic device 100.

It should be understood that an execution sequence of step S604, and step S605a and step S606a is not limited in this embodiment of this application. That is, a sequence of scanning a broadcast by the second electronic device 200 and sending a broadcast by the first electronic device 100 is not limited in this embodiment of this application.

S607a: When the Bluetooth address in the Bluetooth broadcast is stored on a device side, the second electronic device 200 matches the SparkLink address corresponding to the Bluetooth address.

In some embodiments, after receiving the Bluetooth broadcast, the second electronic device 200 may obtain the Bluetooth address carried in the Bluetooth broadcast. Then, the second electronic device 200 searches a Bluetooth address stored on the device side for a Bluetooth address that is the same as the Bluetooth address carried in the Bluetooth broadcast.

If the Bluetooth address that is the same as the Bluetooth address carried in the Bluetooth broadcast exists, the second electronic device 200 may obtain the SparkLink address corresponding to the Bluetooth address, where the Bluetooth address and the SparkLink address that have a correspondence belong to a same device, for example, the first electronic device 100.

If the Bluetooth address that is the same as the Bluetooth address carried in the Bluetooth broadcast does not exist, the second electronic device 200 may determine that the device currently sending the Bluetooth broadcast does not have the SparkLink function, and may establish the Bluetooth connection to the device based on the obtained Bluetooth address. It should be understood that if the first electronic device 100 does not have the SparkLink function, the first electronic device 100 does not send the SparkLink broadcast, that is, the first electronic device 100 does not need to perform step S606a.

S608: The second electronic device 200 sends a SparkLink connection establishment request to the first electronic device 100.

S609: The second electronic device 200 establishes a SparkLink connection to the first electronic device 100.

In some embodiments, after obtaining the SparkLink address, the second electronic device 200 may send the SparkLink connection establishment request to the first electronic device 100 based on the SparkLink address, to establish the SparkLink connection to the first electronic device 100. In some examples, the second electronic device 200 receives the SparkLink broadcast sent by the first electronic device 100, where the SparkLink broadcast carries the SparkLink address. When determining that the SparkLink address carried in the SparkLink broadcast is the same as the SparkLink address that is matched by the second electronic device 200 based on the Bluetooth address, the second electronic device 200 may establish the SparkLink connection to the first electronic device 100 based on the SparkLink address.

Optionally, in a process in which the second electronic device 200 directly requests, based on the SparkLink address found based on the Bluetooth address, the first electronic device 100 to establish the SparkLink connection, the second electronic device 200 may also enable a SparkLink scanning function.

In some other embodiments, after finding the SparkLink address of the first electronic device 100 based on the Bluetooth address, the second electronic device 200 enables SparkLink scanning. After the SparkLink broadcast obtained through scanning carries the address that is the same as the SparkLink address found on the device side, establishing the SparkLink connection to the first electronic device 100 corresponding to the SparkLink address may be triggered.

In this way, the second electronic device 200 may not need to enable SparkLink scanning by default, to reduce power consumption of SparkLink scanning. In addition, the second electronic device 200 can quickly determine, based on the SparkLink address found on the device side, the SparkLink broadcast sent by the first electronic device 100, to improve efficiency of establishing the SparkLink connection.

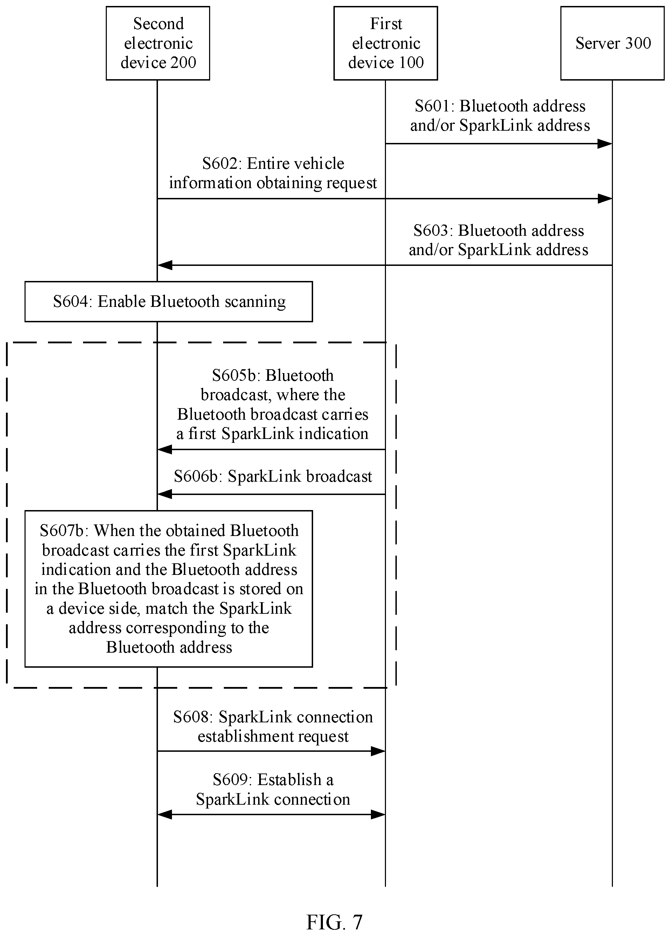

In addition, the first electronic device 100 automatically uploads the Bluetooth address and/or the SparkLink address to the server 300, so that the second electronic device 200 flexibly obtains the Bluetooth address and/or the SparkLink address of the first electronic device 100 subsequently. In some scenarios, a SparkLink indication indicating that the first electronic device 100 has the SparkLink function is added to the Bluetooth broadcast sent by the first electronic device 100, so that the second electronic device 200 can distinguish whether the device that sends the Bluetooth broadcast has the SparkLink function. In addition, forward compatibility with the first electronic device 100 that has only the Bluetooth function is implemented by updating broadcast content. Optionally, as shown in FIG. 7, step S605a to step S607a may be implemented as the following step S605b to step S607b.

S605b: The first electronic device 100 sends a Bluetooth broadcast, where the Bluetooth broadcast carries a first SparkLink indication.

The first SparkLink indication indicates that the first electronic device 100 has the SparkLink function.

S606b: The first electronic device 100 sends a SparkLink broadcast.

S607b: When the obtained Bluetooth broadcast carries the first SparkLink indication and the Bluetooth address in the Bluetooth broadcast is stored on the device side, the second electronic device 200 matches the SparkLink address corresponding to the Bluetooth address.

In some embodiments, the second electronic device 200 receives the Bluetooth broadcast sent by the first electronic device 100, and obtains the Bluetooth address carried in the Bluetooth broadcast and the first SparkLink indication that may be carried.

In some examples, the second electronic device 200 determines, based on the first SparkLink indication carried in the Bluetooth broadcast, that the first electronic device 100 has the SparkLink function. In this case, the second electronic device 200 may obtain the Bluetooth address and the SparkLink address that are stored on the device side, and search, in the Bluetooth address and the SparkLink address, for the SparkLink address that has a correspondence with the Bluetooth address carried in the Bluetooth broadcast. Then, the second electronic device 200 may send the SparkLink connection establishment request to the first electronic device 100 based on the found SparkLink address, to establish the SparkLink connection to the first electronic device 100. Optionally, the second electronic device 200 receives the SparkLink broadcast sent by the first electronic device 100, where the SparkLink broadcast carries the SparkLink address. When determining that the SparkLink address carried in the SparkLink broadcast is the same as the SparkLink address that is matched by the second electronic device 200 based on the Bluetooth address, the second electronic device 200 may establish the SparkLink connection to the first electronic device 100 based on the SparkLink address.

Optionally, after finding the SparkLink address of the first electronic device 100 based on the Bluetooth address, the second electronic device 200 enables SparkLink scanning. After the SparkLink address found on the device side is obtained through scanning, establishing the SparkLink connection to the first electronic device 100 corresponding to the SparkLink address may be triggered.

In some other examples, the second electronic device 200 determines, based on no first SparkLink indication carried in the Bluetooth broadcast, that the first electronic device 100 does not have the SparkLink function. In this case, the second electronic device 200 may establish the Bluetooth connection to the first electronic device 100 based on the Bluetooth address carried in the Bluetooth broadcast.

In this way, the second electronic device 200 may not need to enable SparkLink scanning by default, to reduce power consumption of SparkLink scanning. In addition, the second electronic device 200 can quickly determine, based on the SparkLink address found on the device side, the SparkLink broadcast sent by the first electronic device 100, to improve efficiency of establishing the SparkLink connection.

In addition, based on the first SparkLink indication, a process of determining whether the first electronic device 100 has the SparkLink function is simplified.

In some scenarios, the first electronic device 100 includes a random private address (random private address, RPA) in the SparkLink broadcast sent by the first electronic device 100. The RPA can enhance device privacy and improve device communication security. Optionally, the first electronic device 100 dynamically generates the RPA based on a preset period. Subsequently, after receiving the SparkLink broadcast sent by the first electronic device 100, the second electronic device 200 cannot determine authenticity of an identity of the first electronic device 100 based on the RPA carried in the SparkLink broadcast. As a result, the SparkLink connection cannot be established. In this case, a SparkLink indication indicating that the first electronic device 100 sends the RPA is added to the Bluetooth broadcast sent by the first electronic device 100, so that the second electronic device 200 can distinguish whether the device that sends the Bluetooth broadcast has the SparkLink function and whether the sent SparkLink address is a random address. In addition, forward compatibility with the first electronic device 100 that has only the Bluetooth function is implemented by updating broadcast content, and the communication method provided in this embodiment of this application is applicable to a random address scenario.

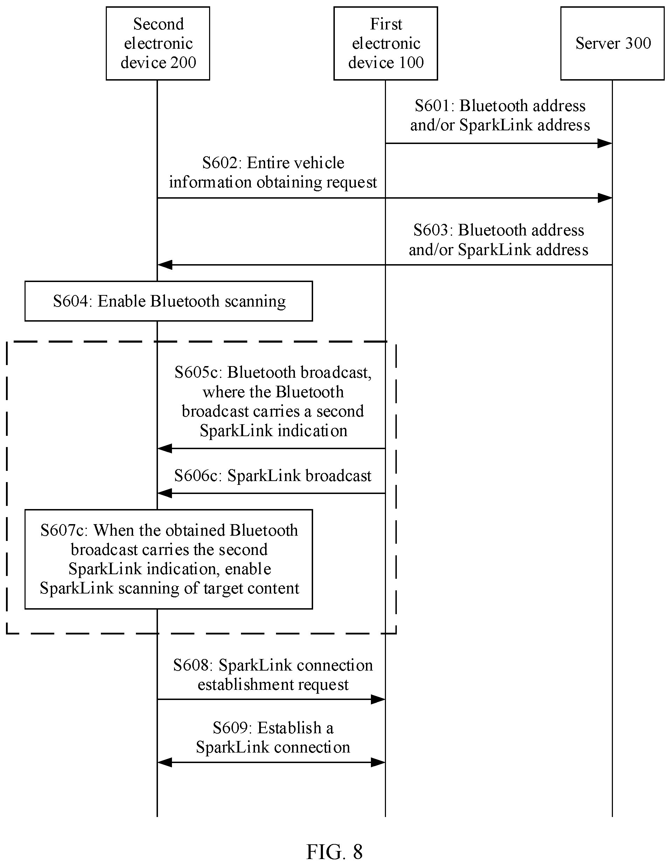

Optionally, as shown in FIG. 8, step S605a to step S607a may be further implemented as the following step S605c to step S607c.

S605c: The first electronic device 100 sends a Bluetooth broadcast, where the Bluetooth broadcast carries a second SparkLink indication.

The second SparkLink indication indicates that the first electronic device 100 has the SparkLink function, and the SparkLink address carried in the sent SparkLink broadcast is an RPA.

S606c: The first electronic device 100 sends a SparkLink broadcast.

S607c: When the obtained Bluetooth broadcast carries the second SparkLink indication, the second electronic device 200 enables SparkLink scanning of target content.

In some embodiments, in step S602, the second electronic device 200 requests the entire vehicle information from the server 300. In step S603, information fed back by the server 300 to the second electronic device 200 may include the Bluetooth address and/or the SparkLink address, and further include information related to the SparkLink function of the first electronic device 100, for example, the SparkLink name.

In some embodiments, the second electronic device 200 receives the Bluetooth broadcast sent by the first electronic device 100, and obtains the Bluetooth address carried in the Bluetooth broadcast and the second SparkLink indication that may be carried.

In some examples, the second electronic device 200 determines, based on the second SparkLink indication carried in the Bluetooth broadcast, that the first electronic device 100 has the SparkLink function, and the SparkLink address carried in the sent SparkLink broadcast is the RPA. In this case, the second electronic device 200 may enable SparkLink scanning of the target content. The target content is, for example, information that is obtained by the second electronic device 200 and that is related to the SparkLink function of the first electronic device 100, such as the SparkLink name. In this way, after obtaining the target content through scanning, the second electronic device 200 may determine that there is a nearby first electronic device 100 to which the SparkLink connection is to be established.

Optionally, the second electronic device 200 may obtain the Bluetooth address and the SparkLink address that are stored on a device side, and search, in the Bluetooth address and the SparkLink address, for the SparkLink address that has a correspondence with the Bluetooth address carried in the Bluetooth broadcast.

Optionally, when the second electronic device 200 obtains the target content through scanning, the second electronic device 200 may establish the SparkLink connection to the first electronic device 100 based on the target content. Alternatively, when the second electronic device 200 obtains the target content through scanning, the second electronic device 200 may send a SparkLink connection establishment request to the first electronic device 100 based on the found SparkLink address, to establish the SparkLink connection to the first electronic device 100.

In some other examples, the second electronic device 200 determines, based on no second SparkLink indication carried in the Bluetooth broadcast, that the first electronic device 100 does not have the SparkLink function. In this case, the second electronic device 200 may establish the Bluetooth connection to the first electronic device 100 based on the Bluetooth address carried in the Bluetooth broadcast.

In this way, based on the second SparkLink indication, the second electronic device 200 establishes the SparkLink connection to the first electronic device 100 in a random address scenario.

It should be understood that, the foregoing uses an example in which the second electronic device 200 determines, by scanning the Bluetooth broadcast, whether the first electronic device 100 has a SparkLink capability, to establish the SparkLink connection, to describe a process of establishing a wireless communication connection between the first electronic device 100 and the second electronic device 200. It should be understood that the second electronic device 200 may further determine, by scanning the SparkLink broadcast, whether the first electronic device 100 has the Bluetooth capability, to establish the Bluetooth connection. Alternatively, with development of communication technologies, the first electronic device 100 may further have more communication capabilities. In this case, the second electronic device 200 may further determine, by scanning the Bluetooth broadcast, the SparkLink broadcast, or another broadcast, a communication capability that the first electronic device 100 may have, to establish the wireless communication connection between devices. For a specific implementation, refer to the foregoing embodiments. Details are not described in embodiments of this application again.

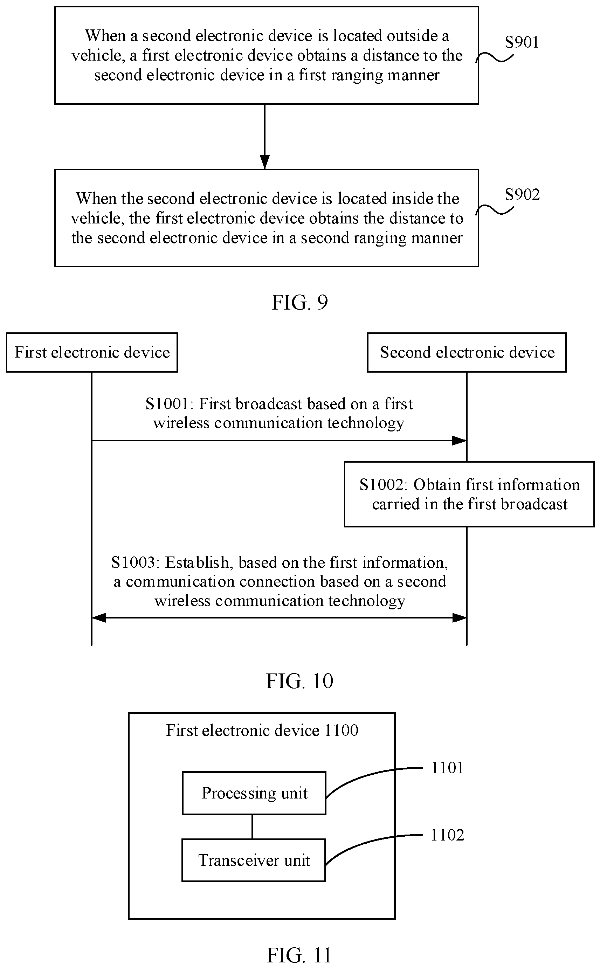

FIG. 9 is a schematic flowchart of another communication method according to an embodiment of this application. It should be noted that the method is not limited to a specific sequence described in FIG. 9 and below. It should be understood that in another embodiment, a sequence of some steps in the method may be exchanged based on an actual requirement, or some steps in the method may be omitted or deleted. The method includes the following steps.

S901: When a second electronic device is located outside a vehicle, a first electronic device obtains a distance to the second electronic device in a first ranging manner.

S902: When the second electronic device is located inside the vehicle, the first electronic device obtains the distance to the second electronic device in a second ranging manner.

Ranging precision of the second ranging manner is less than ranging precision of the first ranging manner. Power consumption of the first ranging manner is higher than that of the second ranging manner. Air interface resource occupation of the first ranging manner is higher than air interface resource occupation of the second ranging manner.

It should be understood that an execution sequence of step S901 and step S902 is not limited in this embodiment of this application. For example, after a user carries the second electronic device and gets in or out of the vehicle, switching of a ranging manner of the first electronic device may be triggered.

In this way, the ranging manner is flexibly switched between inside the vehicle and outside the vehicle, to reduce power consumption and improve appropriate use of air interface resources while meeting a ranging requirement.

The first ranging manner is any one or more of the following: Bluetooth channel sounding-based ranging, SparkLink low energy measurement, and multi-node ranging; and the second ranging manner is received signal strength indicator ranging and/or single-node ranging.

For example, the first ranging manner is multi-node CS ranging, and the second ranging manner is single-node RSSI ranging. For another example, the first ranging manner is multi-node SLEM, and the second ranging manner is single-node SLEM.

In this way, a plurality of flexible implementations of the first ranging manner and the second ranging manner meet power consumption reduction and increase flexibility of switching of the ranging manner.

In some embodiments, after the first electronic device obtains the distance to the second electronic device in the second ranging manner, after detecting that a vehicle door is opened, the first electronic device obtains the distance to the second electronic device in the first ranging manner. After the vehicle door is opened, the user may have a requirement for getting out of the vehicle. In this case, the first electronic device switches the ranging manner from the second ranging manner to the first ranging manner. In this way, it is convenient to obtain a more accurate ranging result subsequently.

In some embodiments, after the vehicle door is opened, it is detected that the vehicle door is closed.

In this case, when the second electronic device is located inside the vehicle, the distance to the second electronic device is obtained in the second ranging manner. When the second electronic device is located outside the vehicle, the distance to the second electronic device is obtained in the first ranging manner.

For example, after detecting that the vehicle door is opened, the first electronic device performs ranging in the first ranging manner. In this process, the first electronic device may detect that the vehicle door is closed. If the first electronic device detects that the vehicle door is closed, there may be two cases. In one case, the user closes the vehicle door without getting out of the vehicle. In this case, the second electronic device is still inside the vehicle, and the first electronic device may switch the ranging manner from the first ranging manner back to the second ranging manner. In this way, a ranging requirement of the first electronic device can be met, and air interface resource occupation and power consumption caused by ranging can be reduced. In another case, the user closes the vehicle door after getting out of the vehicle. In this case, the second electronic device is outside the vehicle, and the first electronic device may continue to perform ranging in the first ranging manner. In this way, a more accurate ranging result can be obtained.

In this way, the ranging manner is flexibly adjusted based on a user requirement and an actual situation.

In some embodiments, the first electronic device determines whether the distance to the second electronic device is less than or equal to a first threshold; and when the distance between the first electronic device and the second electronic device is less than or equal to the first threshold, the first electronic device determines that the second electronic device is located inside the vehicle. In this way, whether the second electronic device is located inside the vehicle is determined based on the distance, to determine whether the ranging manner needs to be adjusted.

In some embodiments, that the first electronic device determines whether the distance to the second electronic device is less than or equal to the first threshold includes: The first electronic device determines, in any one or more of the first ranging manner, the second ranging manner, a connectionless ranging manner, ultrasonic positioning, and global satellite positioning, whether the distance to the second electronic device is less than or equal to the first threshold.

For example, before the first electronic device and the second electronic device establish a communication connection, the distance between the devices may be obtained in the connectionless ranging manner, to determine the ranging manner.

For another example, the first electronic device can obtain a GPS positioning result of the second electronic device, to determine the distance to the second electronic device.

For another example, the first electronic device determines a location of the second electronic device in the ultrasonic positioning manner, to determine the distance to the second electronic device.

For another example, in a process of obtaining the distance to the second electronic device in the first ranging manner or the second ranging manner, the first electronic device may determine a change of the distance between the second electronic device and the first electronic device.

In this way, the first electronic device also flexibly determines, in a plurality of manners, whether the second electronic device is located inside the vehicle, to trigger switching of the ranging manner.

In some embodiments, the first electronic device sends a first broadcast based on a first wireless communication technology. The first broadcast carries at least one of the following content: a first address that is of the first electronic device and that is based on the first wireless communication technology, a first indication indicating that the first electronic device supports a second wireless communication technology, and a second indication indicating that a second address carried in a broadcast sent by the first electronic device based on the second wireless communication technology is a random address. The first broadcast is used to establish a wireless communication connection to the second electronic device based on the second wireless communication technology.

The first wireless communication technology is, for example, a Bluetooth communication technology, and the second wireless communication technology is, for example, a SparkLink communication technology.

In this way, the second electronic device can establish a SparkLink connection to the second electronic device by receiving a Bluetooth broadcast (for example, the first broadcast) sent by the first electronic device. In this way, the second electronic device may not need to enable SparkLink scanning by default, to reduce power consumption of SparkLink scanning.

In some examples, the first electronic device may perform ranging in the first ranging manner or ranging in the second ranging manner based on the communication connection to the second electronic device.

In some other examples, the first electronic device and the second electronic device may obtain the distance to the second electronic device based on the connectionless ranging manner.

In some embodiments, before obtaining the distance to the second electronic device, the first electronic device sends, to a server, the first communication address that is of the first electronic device and that is based on the first wireless communication technology and a second communication address that is of the first electronic device and that is based on the second wireless communication technology.

The first wireless communication address is, for example, a Bluetooth address of the first electronic device, and the second wireless communication address is, for example, a SparkLink address of the first electronic device.

The first wireless communication address and the second wireless communication address are real communication addresses of the first electronic device.

In this way, the first electronic device automatically uploads the Bluetooth address and/or the SparkLink address to the server, so that the second electronic device flexibly obtains the Bluetooth address and/or the SparkLink address of the first electronic device subsequently, to establish the Bluetooth connection or the SparkLink connection.

The foregoing describes an interaction scenario between the first electronic device and the second electronic device by using an example in which the first electronic device switches the ranging manner based on the location of the second electronic device. In some other scenarios, the second electronic device may also perform related interaction steps performed by the first electronic device.

For example, when the second electronic device is located outside the vehicle, the second electronic device determines, in the first ranging manner or another ranging manner (for example, the connectionless ranging manner), that the distance between the second electronic device and the first electronic device is less than or equal to a threshold A, for example, 3 meters or 2 meters, and may send an unlocking indication to the first electronic device, to trigger automatic unlocking of the first electronic device. Alternatively, if the second electronic device determines that the distance to the first electronic device is greater than or equal to a threshold B, for example, 5 meters or 6 meters, the second electronic device may send a locking indication to the first electronic device, to trigger automatic locking of the first electronic device.

For another example, when the second electronic device is located outside the vehicle, the second electronic device obtains the distance to the first electronic device in the first ranging manner. When the second electronic device is located inside the vehicle, the second electronic device obtains the distance to the first electronic device in the second ranging manner. In other words, the second electronic device may also automatically switch the ranging manner based on whether the second electronic device is located inside or outside the vehicle.

For an implementation in which the second electronic device may also perform the related interaction steps performed by the first electronic device, refer to the foregoing embodiments.

Details are not described in embodiments of this application again.

FIG. 10 is a schematic flowchart of another communication method according to an embodiment of this application. It should be noted that the method is not limited to a specific sequence described in FIG. 10 and below. It should be understood that in another embodiment, a sequence of some steps in the method may be exchanged based on an actual requirement, or some steps in the method may be omitted or deleted. The method includes the following steps.

S1001: A second electronic device receives a first broadcast sent by a first electronic device based on a first wireless communication technology.

The first wireless communication technology is, for example, a Bluetooth communication technology, and a second wireless communication technology is, for example, a SparkLink communication technology.

For example, the first electronic device sends a Bluetooth broadcast. Correspondingly, in a process of performing Bluetooth scanning, the second electronic device can receive the Bluetooth broadcast sent by the first electronic device.

In some embodiments, before receiving the first broadcast sent by the first electronic device, the second electronic device downloads and stores a first communication address and a second communication address of the first electronic device from the server, where the first communication address corresponds to the first wireless communication technology, and the second communication address corresponds to the second wireless communication technology. The first wireless communication address is, for example, a Bluetooth address of the first electronic device, and the second wireless communication address is, for example, a SparkLink address of the first electronic device.

The first wireless communication address and the second wireless communication address are real communication addresses of the first electronic device.

In this way, the second electronic device can obtain, from the server, a real communication address uploaded by the first electronic device, to simplify a subsequent process of establishing a communication connection between the second electronic device and the first electronic device. S1002: The second electronic device obtains first information carried in the first broadcast.

The first information includes at least one of the following: a first address that is of the first electronic device and that is based on the first wireless communication technology, a first indication indicating that the first electronic device supports the second wireless communication technology, and a second indication indicating that a second address carried in a broadcast sent by the first electronic device based on the second wireless communication technology is a random address.

The first wireless communication technology is the Bluetooth communication technology, and a second wireless communication technology is the SparkLink communication technology.

For example, the Bluetooth broadcast sent by the first electronic device carries the Bluetooth address of the first electronic device.

For another example, when the first electronic device supports a SparkLink function, the sent Bluetooth broadcast may carry the first indication indicating that the first electronic device supports the SparkLink function.

For another example, a SparkLink broadcast sent by the first electronic device carries a random SparkLink address. In this case, the first electronic device may include, in the sent Bluetooth broadcast, the second indication indicating that the SparkLink address carried in the SparkLink broadcast sent by the first electronic device is a random address.

In this way, based on a plurality of implementations of the first information, the second electronic device can flexibly establish the communication connection to the first electronic device based on the second wireless communication technology subsequently.

S1003: The second electronic device establishes, based on the first information, the communication connection to the first electronic device based on the second wireless communication technology.

In this way, the second electronic device may not need to enable second wireless communication technology-based scanning by default, but may alternatively establish the second wireless communication technology-based communication connection based on scanning of the first wireless communication technology, to reduce power consumption of second wireless communication technology-based scanning.

In some embodiments, the first information includes the first address that is of the first electronic device and that is based on the first wireless communication technology. That the second electronic device establishes, based on the first information, the communication connection to the first electronic device based on the second wireless communication technology includes: The second electronic device obtains at least one pair of locally stored communication addresses. Each pair of the at least one pair of communication addresses respectively corresponds to the first wireless communication technology and the second wireless communication technology. When the at least one pair of communication addresses includes the first communication address that is the same as the first address, the second electronic device obtains the second communication address corresponding to the first communication address. The second electronic device establishes the communication connection to the first electronic device based on the second communication address.

For example, the second electronic device may download the Bluetooth address and the SparkLink address of the first electronic device from the server. Then, the second electronic device may store the Bluetooth address and the SparkLink address, and a correspondence between the Bluetooth address and the SparkLink address.

With reference to related content described in steps S605a to S607a, the second electronic device can match the SparkLink address of the first electronic device on a device side based on the obtained Bluetooth address. Therefore, the second electronic device may establish a SparkLink connection to the first electronic device based on the SparkLink address.

In this way, the second electronic device may not need to enable SparkLink scanning by default, to reduce power consumption of SparkLink scanning. In addition, the second electronic device can quickly determine, based on the SparkLink address found on the device side, the SparkLink broadcast sent by the first electronic device, to improve efficiency of establishing the SparkLink connection.

In some other embodiments, that the second electronic device establishes, based on the first information, the communication connection to the first electronic device based on the second wireless communication technology includes: When the first information includes the first indication, the second electronic device obtains the first address included in the first information, where the first indication indicates that the first electronic device supports the second wireless communication technology. The second electronic device obtains, from the at least one pair of locally stored communication addresses, the second communication address corresponding to the first communication address that is the same as the first address. The second electronic device establishes the communication connection to the first electronic device based on the second communication address.

With reference to related content described in steps S605b to S607b, the second electronic device can determine, based on the obtained first indication, that the first electronic device supports the SparkLink function. Then, the second electronic device can match the SparkLink address of the first electronic device on a device side based on the obtained Bluetooth address. Therefore, the second electronic device may establish a SparkLink connection to the first electronic device based on the SparkLink address.

In this way, the second electronic device may not need to enable SparkLink scanning by default, to reduce power consumption of SparkLink scanning. In addition, the second electronic device can quickly determine, based on the SparkLink address found on the device side, the SparkLink broadcast sent by the first electronic device, to improve efficiency of establishing the SparkLink connection.

In addition, based on a first SparkLink indication, a process of determining whether the first electronic device has the SparkLink function is simplified.

In still some other embodiments, that the second electronic device establishes, based on the first information, the communication connection to the first electronic device based on the second wireless communication technology includes: When the first information includes the second indication, the second electronic device scans the broadcast sent based on the second wireless communication technology, to obtain a second broadcast sent by the first electronic device, where the second broadcast carries target content, and the second indication indicates that the second address carried in the broadcast sent by the first electronic device based on the second wireless communication technology is a random address. The second electronic device obtains, from the at least one pair of locally stored communication addresses, the second communication address corresponding to the first communication address that is the same as the first address included in the first information. The second electronic device establishes the communication connection to the first electronic device based on the second communication address.

The target content is, for example, a SparkLink name of SparkLink communication of the first electronic device.

With reference to related content described in steps S605c to S607c, the second electronic device can determine, based on the obtained second indication, that the SparkLink address carried in the SparkLink broadcast sent by the first electronic device is a random address. In this case, the second electronic device may discover the first electronic device by scanning other target content. For example, the second electronic device determines, by scanning the SparkLink name of the first electronic device, that the first electronic device actually exists nearby. Then, the second electronic device may establish the SparkLink connection to the first electronic device by matching the SparkLink address of the first electronic device on the device side. Alternatively, the second electronic device may directly establish the SparkLink connection to the first electronic device based on the SparkLink name.

In this way, based on the second indication, the second electronic device establishes the SparkLink connection to the first electronic device in a random address scenario.

In some embodiments, after the second electronic device establishes the communication connection to the first electronic device, the communication connection is used for the first electronic device to obtain the distance to the second electronic device in the first ranging manner corresponding to the communication connection when the second electronic device is located outside the vehicle, where the first electronic device is the vehicle or a processing module in the vehicle. The communication connection is further used for the first electronic device to obtain the distance to the second electronic device in the second ranging manner corresponding to the communication connection when the second electronic device is located inside the vehicle. Ranging precision of the second ranging manner is less than ranging precision of the first ranging manner.

The first ranging manner is any one or more of the following: Bluetooth channel sounding-based ranging, SparkLink low energy measurement, and multi-node ranging; and the second ranging manner is received signal strength indicator ranging and/or single-node ranging.

In this way, the ranging manner is flexibly switched between inside the vehicle and outside the vehicle, to reduce power consumption and improve appropriate use of air interface resources while meeting a ranging requirement.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on the execution sequence between the steps. The steps may alternatively be performed in another execution sequence. It is not intended to indicate that the execution order is the only order in which these operations can be performed. A character of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

The foregoing uses an example in which the second electronic device establishes the SparkLink connection to the first electronic device based on the received Bluetooth broadcast sent by the first electronic device, to describe an interaction scenario between the first electronic device and the second electronic device. In some other scenarios, the first electronic device may also perform related interaction steps performed by the second electronic device.

For example, the second electronic device reports the Bluetooth address and/or the SparkLink address of the second electronic device to the server. In this case, after receiving the Bluetooth broadcast sent by the second electronic device, the first electronic device may also determine, based on the first information carried in the Bluetooth broadcast, whether to establish the SparkLink connection to the second electronic device, so as to reduce power consumption of scanning the SparkLink broadcast by the first electronic device.

For an implementation in which the first electronic device may also perform the related interaction steps performed by the second electronic device, refer to the foregoing embodiments. Details are not described in embodiments of this application again.

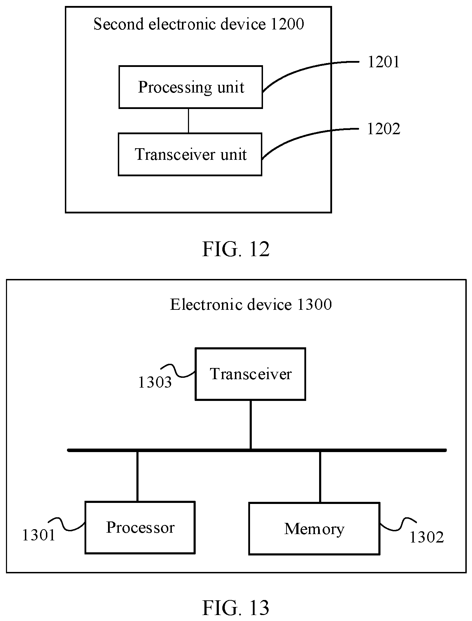

The communication method provided in embodiments of this application is described above in detail with reference to FIG. 5 to FIG. 10. The following describes in detail a first electronic device and a second electronic device provided in embodiments of this application with reference to FIG. 11 and FIG. 12.

In a possible design, FIG. 11 is a diagram of a structure of a first electronic device according to an embodiment of this application. As shown in FIG. 11, a first electronic device 1100 may include a processing unit 1101 and a transceiver unit 1102. The first electronic device 1100 may be configured to implement a function of the first electronic device 100 (like a vehicle or a processing unit in the vehicle) in the foregoing method embodiments.

Optionally, the processing unit 1101 is configured to support the first electronic device 1100 in performing S504, S505, S506, S507, and S508 in FIG. 5, and/or is configured to support the first electronic device 1100 in performing S901 and S902 in FIG. 9.

Optionally, the transceiver unit 1102 is configured to support the first electronic device 1100 in performing S501 and S503 in FIG. 5; and/or is configured to support the first electronic device 1100 in performing S601, S605a, S606a, S608, and S609 in FIG. 6; and/or is configured to support the first electronic device 1100 in performing S605b and S606b in FIG. 7; and/or is configured to support the first electronic device 1100 in performing S605c and S606c in FIG. 8; and/or is configured to support the first electronic device 1100 in performing S1001 and S1003 in FIG. 10. Optionally, the transceiver unit 1102 may include a receiving unit and a sending unit, may be implemented by a transceiver or a transceiver-related circuit component, and may be a transceiver or a transceiver module. Operations and/or functions of the units in the first electronic device 1100 are respectively intended to implement corresponding procedures of the communication method in the foregoing method embodiments. All related content of the steps in the foregoing method embodiments may be cited in function descriptions of the corresponding functional units. For brevity, details are not described herein again.

Optionally, the first electronic device 1100 shown in FIG. 11 may further include a storage unit (not shown in FIG. 11), and the storage unit stores a program or instructions. When the processing unit 1101 and the transceiver unit 1102 execute the program or the instructions, the first electronic device 1100 shown in FIG. 11 can perform the communication method in the foregoing method embodiments.

For technical effects of the first electronic device 1100 shown in FIG. 11, refer to technical effects of the communication method in the foregoing method embodiments. Details are not described herein again.

In addition to a form of the first electronic device 1100, the technical solutions provided in this application may alternatively be a functional unit or a chip in the first electronic device, or an apparatus that matches with the first electronic device for use.

In a possible design, FIG. 12 is a diagram of a structure of a second electronic device according to an embodiment of this application. As shown in FIG. 12, a second electronic device 1200 may include a processing unit 1201 and a transceiver unit 1202. The second electronic device 1200 may be configured to implement a function of the second electronic device 100 (like a mobile phone or a wearable device) in the foregoing method embodiments.

Optionally, the processing unit 1201 is configured to support the second electronic device 1200 in performing S502 in FIG. 5; and/or is configured to support the second electronic device 1200 in performing S604 and S607a in FIG. 6; and/or is configured to support the second electronic device 1200 in performing S607b in FIG. 7; and/or is configured to support the second electronic device 1200 in performing S607c in FIG. 8; and/or is configured to support the second electronic device 1200 in performing S1002 in FIG. 10.

Optionally, the transceiver unit 1202 is configured to support the second electronic device 1200 in performing S501 and S503 in FIG. 5; and/or is configured to support the second electronic device 1200 in performing S602, S603, S605a, S606a, S608, and S609 in FIG. 6; and/or is configured to support the second electronic device 1200 in performing S605b and S606b in FIG. 7; and/or is configured to support the second electronic device 1200 in performing S605c and S606c in FIG. 8; and/or is configured to support the second electronic device 1200 in performing S1001 and S1003 in FIG. 10.

Optionally, the transceiver unit 1202 may include a receiving unit and a sending unit, may be implemented by a transceiver or a transceiver-related circuit component, and may be a transceiver or a transceiver module. Operations and/or functions of the units in the second electronic device 1200 are respectively intended to implement corresponding procedures of the communication method in the foregoing method embodiments. All related content of the steps in the foregoing method embodiments may be cited in function descriptions of the corresponding functional units. For brevity, details are not described herein again.

Optionally, the second electronic device 1200 shown in FIG. 12 may further include a storage unit (not shown in FIG. 12), and the storage unit stores a program or instructions. When the processing unit 1201 and the transceiver unit 1202 execute the program or the instructions, the second electronic device 1200 shown in FIG. 12 can perform the communication method in the foregoing method embodiments.

For technical effects of the second electronic device 1200 shown in FIG. 12, refer to technical effects of the communication method in the foregoing method embodiments. Details are not described herein again.

In addition to a form of the second electronic device 1200, the technical solutions provided in this application may alternatively be a functional unit or a chip in the second electronic device, or an apparatus that matches with the second electronic device for use.

FIG. 13 shows another example structure of an electronic device. As shown in FIG. 13, the electronic device 1300 includes a processor 1301, a memory 1302, and a transceiver 1303. Optionally, the electronic device 1300 may be the first electronic device 1100 shown in FIG. 11, or the second electronic device 1200 shown in FIG. 12.

The processor 1301 may be a general-purpose central processing unit (central processing unit, CPU), a microprocessor, an application-specific integrated circuit (application-specific integrated circuit, ASIC), or one or more integrated circuits configured to control execution of programs in solutions in this application.

The transceiver 1303 is configured to communicate with another device. In embodiments of this application, the transceiver 1303 may be a module, a circuit, a bus, an interface, or another apparatus that can implement a communication function, and is configured to communicate with another device. Optionally, the transceiver 1303 may be an independently disposed transmitter, and the transceiver 1303 may be configured to send information to another device. Alternatively, the transceiver 1303 may be an independently disposed receiver, and is configured to receive information from another device. Alternatively, the transceiver 1303 may be a component that integrates information sending and receiving functions. A specific implementation of the transceiver 1303 is not limited in embodiments of this application.

The memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage, a magnetic disk storage medium or another magnetic storage device, or any other medium that can be used to carry or store expected program code in a form of instruction or a data structure and that can be accessed by a computer. However, the memory is not limited thereto. The memory may exist independently, and is connected to the processor through a communication line. The memory may alternatively be integrated with the processor.

The memory 1302 is configured to store computer-executable instructions used to implement the solutions of this application, and the processor 1301 controls execution of the computer-executable instructions. The processor 1301 is configured to execute the computer-executable instructions stored in the memory 1302, to implement a communication method provided in the following embodiments of this application.

Optionally, the computer-executable instructions in embodiments of this application may also be referred to as application code, instructions, a computer program, or another name. This is not specifically limited in embodiments of this application.

In a specific implementation, in an embodiment, the processor 1301 may include one or more CPUs.

In a specific implementation, in an embodiment, the electronic device 1300 may include a plurality of processors. Each of the processors may be a single-core (single-CPU) processor, or may be a multi-core (multi-CPU) processor. The processor herein may be one or more devices, circuits, and/or processing cores configured to process data (for example, computer program instructions). It may be understood that the structure shown in this embodiment of this application does not constitute a specific limitation on the electronic device 1300. In some other embodiments of this application, the electronic device 1300 may include more or fewer components than those shown in the figure, or a combination of a part of the components, or splits from a part of the components, or an arrangement of different components. The components shown in the figure may be implemented by hardware, software, or a combination of software and hardware.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be implemented by using a hardware integrated logical circuit in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the related steps, to implement the communication method in the foregoing embodiments.

An embodiment of this application further provides a computer program product. When the computer program product runs on a computer, the computer is enabled to perform the related steps, to implement the communication method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the communication method in the foregoing method embodiments.

The apparatus, the computer-readable storage medium, the computer program product, or the chip provided in embodiments of this application are all configured to perform the corresponding method provided above. Therefore, for beneficial effects that can be achieved, refer to beneficial effects in the corresponding method provided above, and details are not described herein again. Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application specific-integrated circuit (application specific-integrated circuit, ASIC).

Based on descriptions of the foregoing implementations, a person skilled in the art may clearly understand that, for ease and brevity of description, division of the foregoing functional modules is merely used as an example for description. In practice, the foregoing functions can be allocated to different modules and implemented as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. The described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the modules or units may be implemented in an electrical form, a mechanical form, or another form.

In addition, functional units in embodiments of this application may be integrated into one processing unit, each of the units may exist independently physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement in the technical scope disclosed in this application shall fall in the protection scope of this application. Therefore, the protection scope of this application shall be subject to the protection scope of the claims.

## Claims

1. A communication method, applied to a first electronic device, wherein the first electronic device is a vehicle or a processing module in the vehicle, and the method comprises:
when a second electronic device is located outside the vehicle, obtaining, by the first electronic device, a distance to the second electronic device in a first ranging manner; and
when the second electronic device is located inside the vehicle, obtaining, by the first electronic device, the distance to the second electronic device in a second ranging manner, wherein
ranging precision of the second ranging manner is less than ranging precision of the first ranging manner.

2. The method according to claim 1, wherein after obtaining, by the first electronic device, the distance to the second electronic device in the second ranging manner, the method further comprises:
after detecting that a vehicle door is opened, obtaining the distance to the second electronic device in the first ranging manner.

3. The method according to claim 2, wherein the method further comprises:
detecting that the vehicle door is closed;
when the second electronic device is located inside the vehicle, obtaining the distance to the second electronic device in the second ranging manner; and
when the second electronic device is located outside the vehicle, obtaining the distance to the second electronic device in the first ranging manner.

4. The method according to any one of claims 1 to 3, wherein the first ranging manner is any one or more of the following: Bluetooth channel sounding-based ranging, SparkLink low energy measurement, and multi-node ranging; and the second ranging manner is received signal strength indicator ranging and/or single-node ranging.

5. The method according to any one of claims 1 to 4, wherein the method further comprises:
determining, by the first electronic device, whether the distance to the second electronic device is less than or equal to a first threshold; and
when the distance between the first electronic device and the second electronic device is less than or equal to the first threshold, determining that the second electronic device is located inside the vehicle.

6. The method according to claim 5, wherein determining, by the first electronic device, whether the distance to the second electronic device is less than or equal to the first threshold comprises:
determining, by the first electronic device in any one or more of the first ranging manner, the second ranging manner, a connectionless ranging manner, ultrasonic positioning, and global satellite positioning, whether the distance to the second electronic device is less than or equal to the first threshold.

7. The method according to any one of claims 1 to 6, wherein before obtaining the distance to the second electronic device, the method further comprises:
sending a first broadcast based on a first wireless communication technology, wherein the first broadcast carries at least one of the following content: a first address that is of the first electronic device and that is based on the first wireless communication technology, a first indication indicating that the first electronic device supports a second wireless communication technology, and a second indication indicating that a second address carried in a broadcast sent by the first electronic device based on the second wireless communication technology is a random address, wherein
the first broadcast is used to establish a wireless communication connection to the second electronic device based on the second wireless communication technology.

8. The method according to any one of claims 1 to 7, wherein before obtaining the distance to the second electronic device, the method further comprises:
sending, to a server, a first communication address that is of the first electronic device and that is based on the first wireless communication technology, and a second communication address that is of the first electronic device and that is based on the second wireless communication technology.

9. A communication method, applied to a second electronic device, wherein the method comprises:
receiving a first broadcast sent by a first electronic device, wherein the first broadcast is a broadcast sent by the first electronic device based on a first wireless communication technology;
obtaining first information carried in the first broadcast; and
establishing, based on the first information, a communication connection to the first electronic device based on a second wireless communication technology, wherein
the communication connection is used for the first electronic device to obtain a distance to the second electronic device in a first ranging manner corresponding to the communication connection when the second electronic device is located outside a vehicle, and the first electronic device is the vehicle or a processing module in the vehicle; and
the communication connection is further used for the first electronic device to obtain the distance to the second electronic device in a second ranging manner corresponding to the communication connection when the second electronic device is located inside the vehicle, wherein ranging precision of the second ranging manner is less than ranging precision of the first ranging manner.

10. The method according to claim 9, wherein the first information comprises at least one of the following: a first address that is of the first electronic device and that is based on the first wireless communication technology, a first indication indicating that the first electronic device supports the second wireless communication technology, and a second indication indicating that a second address carried in a broadcast sent by the first electronic device based on the second wireless communication technology is a random address.

11. The method according to claim 9 or 10, wherein the first information comprises the first address that is of the first electronic device and that is based on the first wireless communication technology; and establishing, based on the first information, the communication connection to the first electronic device based on the second wireless communication technology comprises:
obtaining at least one pair of locally stored communication addresses, wherein each pair of the at least one pair of communication addresses respectively corresponds to the first wireless communication technology and the second wireless communication technology;
when the at least one pair of communication addresses includes a first communication address that is the same as the first address, obtaining a second communication address corresponding to the first communication address; and
establishing the communication connection to the first electronic device based on the second communication address.

12. The method according to any one of claims 9 to 11, wherein establishing, based on the first information, the communication connection to the first electronic device based on the second wireless communication technology comprises:
when the first information comprises the first indication, obtaining the first address comprised in the first information, wherein the first indication indicates that the first electronic device supports the second wireless communication technology;
obtaining, from the at least one pair of locally stored communication addresses, the second communication address corresponding to the first communication address that is the same as the first address; and
establishing the communication connection to the second electronic device based on the second communication address.

13. The method according to claim 9 or 10, wherein establishing, based on the first information, the communication connection to the first electronic device based on the second wireless communication technology comprises:
when the first information comprises the second indication, scanning the broadcast sent based on the second wireless communication technology, to obtain a second broadcast sent by the first electronic device, wherein the second broadcast carries target content, and the second indication indicates that the second address carried in the broadcast sent by the first electronic device based on the second wireless communication technology is the random address;
obtaining, from at least one pair of locally stored communication addresses, a second communication address corresponding to a first communication address that is the same as the first address comprised in the first information; and
establishing the communication connection to the second electronic device based on the second communication address.

14. The method according to any one of claims 9 to 13, wherein before receiving the first broadcast sent by the first electronic device, the method further comprises:
downloading and storing the first communication address and the second communication address of the first electronic device from a server, wherein the first communication address corresponds to the first wireless communication technology, and the second communication address corresponds to the second wireless communication technology.

15. The method according to any one of claims 9 to 14, wherein the first ranging manner is any one or more of the following: Bluetooth channel sounding-based ranging, SparkLink low energy measurement, and multi-node ranging; and the second ranging manner is received signal strength indicator ranging and/or single-node ranging.

16. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 8, or the electronic device is enabled to perform the method according to any one of claims 9 to 15.

17. A vehicle, comprising the electronic device according to claim 16.

18. A computer-readable storage medium, wherein the computer-readable storage medium comprises a computer program, and when the computer program is run on an electronic device, the electronic device is enabled to perform the method according to any one of claims 1 to 8, or the electronic device is enabled to perform the method according to any one of claims 9 to 15.

19. A computer program product, wherein when the computer program product runs on a computer, the computer is enabled to perform the method according to any one of claims 1 to 8, or the computer is enabled to perform the method according to any one of claims 9 to 15.
